# EUROPÄISCHE PATENTSCHRIFT

(11) **EP 1 455 466 B1**
(45) Veröffentlichungstag und Bekanntmachung des Hinweises auf die Patenterteilung: **02.08.2006**
(21) Anmeldenummer: 04002305.3
(22) Anmeldetag: 03.02.2004
(51) Int. Cl.: H04B 7/08

(54) **Scanning-Antenne-Diversitysystem für den FM-Hörrundfunkempfang für Fahrzeuge**
Scanning antenna Diversity system for FM radio for vehicles
Système de scanning diversifié à multiples antennes pour la fréquence FM pour des véhicules

(30) Priorität: 04.02.2003 DE 10304431
(43) Veröffentlichungstag der Anmeldung: 08.09.2004
(73) Patentinhaber: FUBA Automotive GmbH & Co. KG, 31162 Bad Salzdetfurth (DE)
(72) Erfinder: Lindenmeier, Heinz, 82152 Planegg (DE)

(56) Entgegenhaltungen:
- EP-A- 1 098 454
- DE-A- 3 243 146
- DE-A- 10 102 616
- DE-B- 2 827 572

## Beschreibung

Die Erfindung betrifft ein Scanning-Antennen-Diversitysystem für den FM-Hörrundfunk für Fahrzeuge mit einer Antennenanlage 1 mit steuerbarer logischer Schalteinrichtung 2, bei der mit unterschiedlichen Schaltstellungen jeweils ein diversitätsmäßig unterschiedliches hochfrequentes Empfangssignal 5 einem Empfänger 3 zugeführt ist und ein aus diesem Empfangssignal 5 abgeleitetes ZF-Empfangssignal 9 einen Diversityprozessor 4 ansteuert, der bei Vorliegen einer Empfangsstörung die logische Schalteinrichtung 2 in eine andere Schaltstellung weiterschaltet.

Schaltungsanordnungen dieser Art sind bekannt aus der DE 35 17 247 A1 und der DE 101 02 616 A1. Bei den dort beschriebenen Antennendiversity-Empfangsanlagen zur Elimination von Störungen beim Empfang frequenzmodulierter Rundfunkaussendungen werden einem Diversityprozessor eine Anzahl von Antennensignalen zugeführt, von denen zu jedem Zeitpunkt ein ausgewähltes Antennensignal zum Empfänger durchgeschaltet ist. Dieses hochfrequente Signal wird im Empfänger in den Zwischenfrequenzbereich (ZF) umgesetzt und dieses ZF-Signal wird dem Diversityprozessor zur Erkennung von Störungen zugeführt. Bei Erkennung einer Störung werden im Diversityprozessor Schaltsignale zum Umschalten auf ein anderes Antennensignal abgeleitet. Dadurch werden durch Mehrwegeempfang bedingte audiofrequente Störungen weitgehend vermieden, wenn ausreichende Empfangsverhältnisse vorliegen.

Ein Scanning-Antennen-Diversitysystem nach dem Stand der Technik, wie es z.B aus der DE 44 03 612 bekannt ist, ist in Fig. 1 dargestellt. Bei frequenzmodulierten Rundfunksignalen ergibt sich eine Empfangsstörung bei einer Antenne durch die Überlagerung mehrerer Teilwellen mit unterschiedlichen Amplituden, Phasen- und Zeitdifferenzen am Empfangsort. Die dadurch entstehenden Pegeleinbrüche sind mit Frequenzstörhubspitzen korreliert und verursachen lineare Signalverzerrungen in Abhängigkeit vom Modulationsinhalt im Hörfrequenzbereich. Bei Überschreiten einer vorgegebenen Frequenzstörhubschwelle bzw. bei Überschreiten einer störungsbedingten Amplitudenmodulation erkennt der Störungsdetektor 6 unmittelbar auf Störung und veranlasst ein Weiterschalten auf ein anderes zur Verfügung stehendes Antennensignal bzw. gegebenenfalls auf eine andere in einer Antennenmatrix gebildeten Linearkombination. Auf diese Weise werden alle zur Verfügung stehenden HF-Signale auf Störungen geprüft und nacheinander zum Empfänger durchgeschaltet. Die während der Störerkennungszeit einer Störung aufgenommene Störenergie wird hörbar und reduziert die Hörsignalqualität umso mehr, je öfter sich dieser Suchprozess in schneller Folge wiederholt und je mehr Störenergie aufgrund einer längeren Störerkennungszeit in den Hörkanal fällt. Deshalb muss die Störerkennungszeit so kurz wie möglich sein. Besonders treffsicher zeigen solche Prozessoren die Störung an, wenn sie auf die Gleichzeitigkeit der Störungen in der Frequenzabweichung und der Störamplitudenmodulation abgestellt sind. Als schnell anzeigender Störungsdetektor wird in derartigen Systemen häufig der Diversity-Prozessor vom Typ TEA 6101 der Fa. Philips verwendet.

Diversityprozessoren mit Momentanstörungsanzeige 10 nach dem Stand der Technik erkennen eine Störung, wenn z.B. die Frequenzabweichungsschwelle 18 bzw. die Amplitudenstörmodulationsschwelle 26 überschritten wird. Rauschstörungen werden in der Momentanstörungsanzeige 10 nur dann erkannt, wenn der aktuelle Momentanwert die vorgegebene Schwelle, an der die Störung gemessen wird, überschreitet. Die minimale Störerkennungszeit für eine plötzliche, die vorgegebenen Schwellen überschreitende Störung z.B. aufgrund einer Nachbarkanal-, Gleichkanal- oder einer Intermodulationsinterferenz, ist bei Prozessoren dieser Art durch die Bandbreite des Zwischenfrequenzkanals begrenzt und beträgt 30 bis 50 µs. Eine Störerkennungszeit von <100 µs kann somit sichergestellt werden. Insbesondere bei Störabständen des Hochfrequenzträgers bzw. Zwischenfrequenzträgers mit Werten zwischen 6 dB und 12 dB zeigt es sich, dass der aktuelle Wert einer Frequenzabweichung von z.B. 75 kHz mit großen Erkennungszeiten verbunden ist.

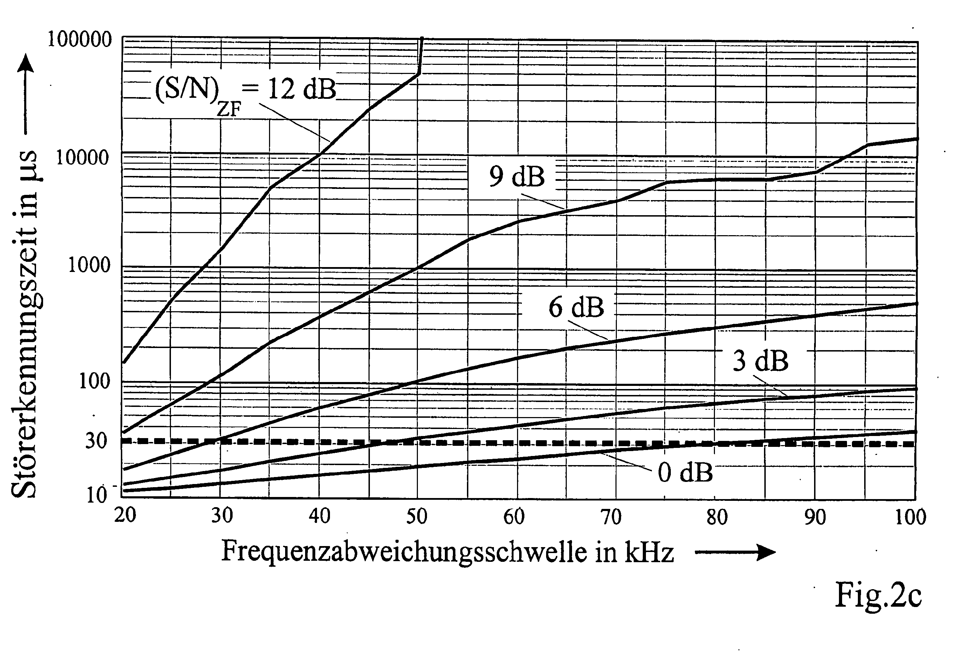

Diese Erkennungszeiten sind in Abhängigkeit von der im Prozessor eingestellten Frequenzabweichungsschwelle 18 für verschiedene Signal-Rausch-Abstände zwischen 0 dB ≤ (S/N)_{ZF} ≤ 12 dB in Fig. 2c dargestellt. Insbesondere bei Stereoempfang führen derartige (S/N)_{ZF} akustisch bereits zu einem deutlich verrauschten Signal. Hierbei zeigt sich, dass aufgrund der sinkenden Wahrscheinlichkeit des Auftretens großer Frequenzabweichungen durch den Momentanwert des Rauschens die Ansprechzeit eines derartigen ersten Störungsdektors 6 große Werte annimmt. Die gestrichelte Linie in Fig. 2c kennzeichnet die erwartete Ansprechzeit von 30 µs und die mittleren Ansprechzeiten für ein Überschreiten einer Frequenzabweichungsschwelle 18 von 75 kHz erreicht Werte 60 µs bei (S/N)_{ZF} von 3 dB und steigt auf 6 ms bei (S/N)_{ZF} von 9 dB. Bei einem Signal-Störabstand von 12 dB ist die Ansprechzeit mit deutlich größer als 100 ms wesentlich zu lang, um für diesen Betriebszustand eine zufriedenstellende Diversityfunktion zu erreichen. Bei einem ersten Störungsdetektor 6 nach dem Stand der Technik werden daher zweckmäßigerweise die Frequenzabweichungsschwelle 18 abhängig von der aktuellen mittleren Frequenzabweichung entsprechend der Frequenzmodulation geregelt. Auch bei kleinen mittleren Frequenzabweichungen (z.B. Programminhalte mit geringer Lautstärke) und einer auf z.B. 40 kHz geregelten Frequenzabweichungsschwelle 18 beträgt bei einem Signal von (S/N)_{ZF} = 9 dB die Ansprechzeit typisch 500 µs und bei (S/N)_{ZF} = 12 dB typisch 10 ms. Es gibt somit Empfangssituationen, in welchen das aktuelle Empfangssignal deutlich verrauscht ist und der erste Störungsdetektor 6 zu lange braucht, um eine Störung zu erkennen und um eine Umschaltung des hochfrequenten Empfangssignals 5 auf ein besseres Empfangssignal zu veranlassen. Diese Ansprechzeiten überschreiten sämtlich das tolerierbare Maß, um bei Vorliegen eines verrauschten Signals ein perfektes Empfangsverhalten zu gewährleisten. Zwar ist die Bandbreite des ZF-Kanals groß genug, um die o.g. Störungen, bedingt durch Nachbarkanal-, Gleichkanal- oder Intermodulationsinterferenzen hinreichend frühzeitig zu erkennen, aufgrund der besonderen statistischen Eigenschaften eines verrauschten Signals ist ein Störungsdetektor dieser Art für die Erkennung von Rauschen nur bedingt geeignet.

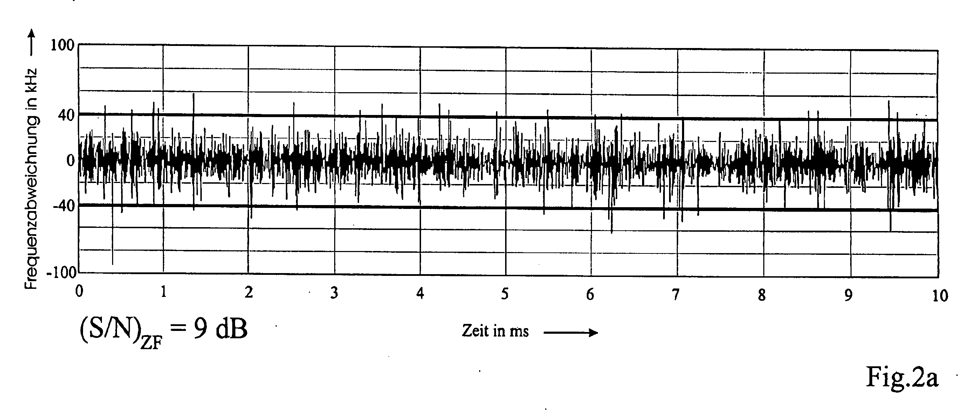

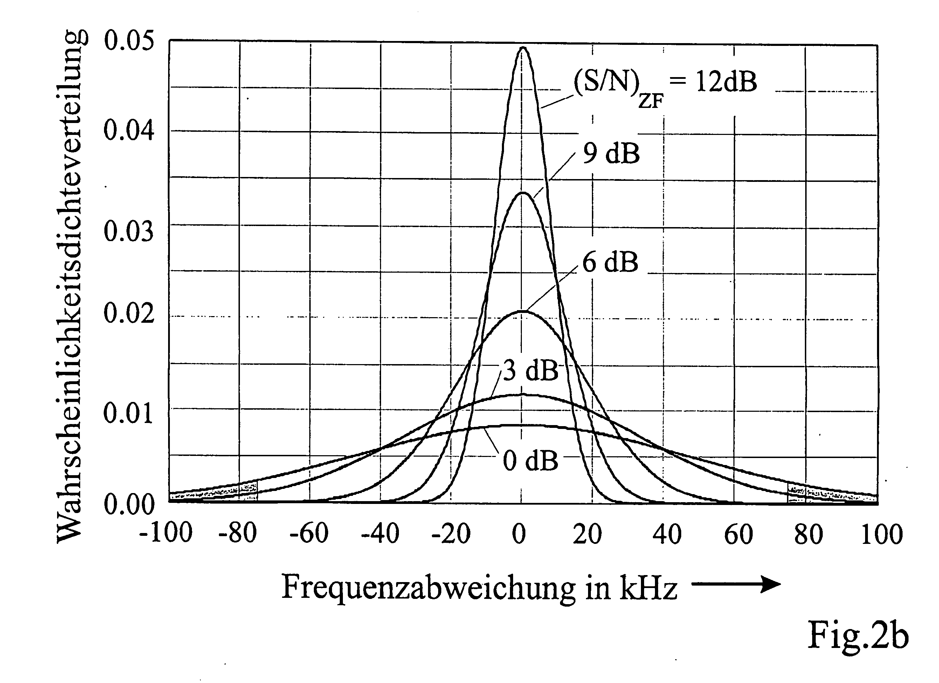

Zur Veranschaulichung des überraschenden Phänomens, welches darin besteht, dass die Erkennungsdauer für ein verrauschtes Signal mit besser werdendem Signal-Rauschverhältnis größer wird, wird auf die Darstellungen in Fig. 2a und Fig. 2b verwiesen. Fig. 2a zeigt die durch Rauschen verursachte Frequenzstörabweichung einer verrauschten Trägerschwingung für (S/N)_{ZF} = 9 dB. Die mittlere Zeitspanne zwischen Frequenzstörabweichungen, welche pulsartig die Schwelle von 40 kHz überschreiten, beträgt dabei ca. 0.4 ms und es ist erkennbar, dass bereits bei einer Schwelle von 50 kHz die entsprechenden Zeitspannen wesentlich größer wären. Diese Zeitspannen steigen mit wachsendem Signal-Rauschverhältnis derart an, dass während der dargestellten Beobachtungszeit von 10 ms die durch Rauschen bedingte Frequenzstörabweichung die durch Normung für ein Nutzsignal vorgegebene maximale Frequenzabweichung von 75 kHz nicht einmal erreicht. Die Beobachtung über eine längere Zeit ergibt, dass der Mittelwert dieser Zeitspanne ca. 6 ms beträgt, wie dies aus Fig. 2c hervorgeht. Die Betrachtung zeigt somit, dass die Erkennungszeit der Rauschstörung auch zufällig ist und auch wesentlich länger sein kann als der Mittelwert es ausweist. Zur weiteren Verdeutlichung der Reduzierung der Wahrscheinlichkeit für das Überschreiten einer Frequenzabweichung von 75 kHz einer verrauschten ZF-Trägerschwingung ist in Fig. 2b die Wahrscheinlichkeitsdichteverteilung der Frequenzabweichung dargestellt. Die grau hinterlegten Flächen der Kurve für (S/N)_{ZF} = 0 dB und deren Fortsetzung über den dargestellten Bereich hinaus weisen die Wahrscheinlichkeit für diese Überschreitung aus. Der starke Rückgang der entsprechenden Flächen der übrigen dargestellten Funktionen lässt den starken Abfall der Überschreitungswahrscheinlichkeit mit größer werdendem (S/N)_{ZF} erkennen und verdeutlicht den damit verbundenen Anstieg der mittleren Störerkennungszeit gemäß Fig. 2c.

Der Erfindung liegt deshalb die Aufgabe zugrunde, bei einem Scanning-Antennen-Diversitysystem für den FM-Hörrundfunk für Fahrzeuge die Störerkennungszeit für das plötzliche Auftreten eines verrauschten Empfangssignals gegenüber dem Stand der Technik zu verkürzen und dabei die subjektiv wahrgenommene Hörsignalqualität im Hinblick auf das dynamische Verhalten des Scanning-Antennen-Diversitysystems auf wirtschaftliche Weise zu verbessern.

Diese Aufgabe wird erfindungsgemäß durch die im Kennzeichen des Anspruchs 1 angegebenen Merkmale gelöst. Besondere Ausführungsarten und weitere Ausgestaltungen der Erfindung sind in den Unteransprüchen angegeben.

Die mit der Erfindung erzielbaren Vorteile bestehen darin, bei nach dem Scanningprinzip arbeitenden Mehrantennen-Diversitysystemen die Zeitspanne für die Erkennung eines verrauschten Signals durch den Diversityprozessor 4 wesentlich kürzer zu gestalten als es durch die Momentanstörungsanzeige 10 eines Detektors vom Typ des ersten Störungsdetektors 6 gegeben ist. Dies ist insbesondere bei Signalen, bei denen der Rauschanteil zwar noch störend, jedoch das Signal bereits deutlich hörbar ist, von Bedeutung. Dieser Vorteil ist auf erfindungsgemäße Weise äußerst wirtschaftlich zu erreichen. Andere Antennen-Diversity-Systeme arbeiten mit mehreren gleichzeitig aufgenommenen Antennensignalen durch Umsetzung in den Zwischenfrequenzbereich und anschließender Gleichphasung der Signale. Diese Verfahren führen zu einer Verbesserung des Signal-Rausch-Verhältnisses, sind jedoch aufgrund der zweifach erforderlichen Umsetzung in den Zwischenfrequenzbereich äußerst aufwändig und auf die Verwendung von nur 2 Antennensignalen begrenzt. Mit der vorliegenden Anordnung wird erreicht, dass das Rauschen im Signal durch hinreichend frühzeitige Erkennung nach seinem Auftreten und damit verbundener Umschaltung der Antennensignale praktisch nicht mehr wahrgenommen wird und dies auf eine technisch einfache und daher wirtschaftliche Art geschieht.

Die Erfindung wird im Folgenden an Hand von Ausführungsbeispielen näher erläutert. Die zugehörigen Figuren zeigen im Einzelnen:

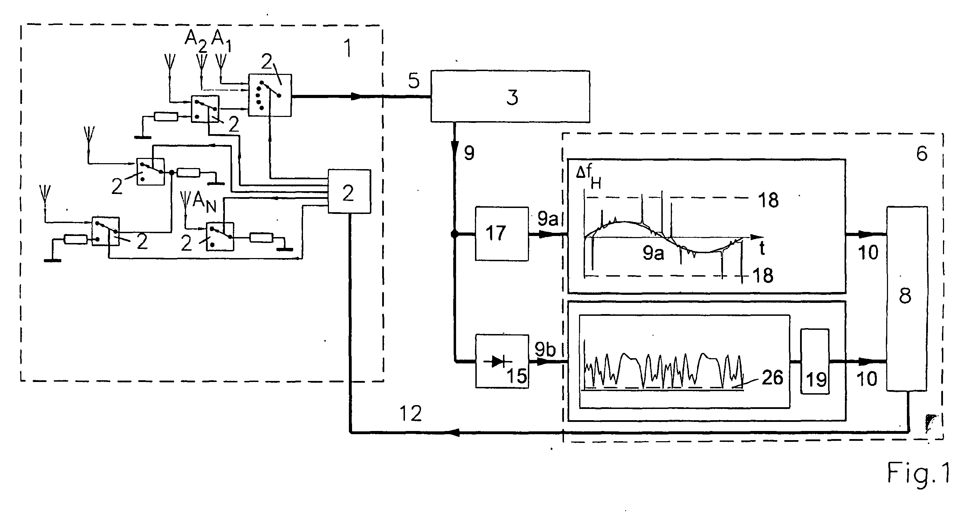

Fig. 1: Scanning-Antennen-Diversitysystem nach dem Stand der Technik
Fig. 2a: Frequenzabweichung in Abhängigkeit der Zeit bei einem (S/N)_{ZF} = 9 dB
Fig. 2b: Wahrscheinlichkeitsdichteverteilung der Frequenzabweichung für verschiedene Signal-Rausch-Verhältnisse in der ZF-Ebene
Fig. 2c: Störerkennungszeit in Abhängigkeit von der Frequenzabweichungsschwelle für verschiedene Signal-Rausch-Verhältnisse
Fig. 3: Scanning-Antennen-Diversitysystem nach der Erfindung
Fig. 4: Scanning-Antennen-Diversitysystem nach der Erfindung mit ausgestaltetem zweitem Störungsdetektor 7 durch Auswertung der Störenergie "N" nahe des Hörfrequenzbereichs durch den Bandpass 30 und den Hochpass 29
Fig. 5: Frequenzbelegung des genormten Stereomultiplexsignals mit Zusatzsignalen bei 57 kHz und grau hinterlegten Frequenzbereichen, die die Störungsenergie "N" beinhalten
Fig. 6: Scanning-Antennen-Diversitysystem nach Fig. 4 mit zusätzlicher Auswertung der Nutzsignalenergie mit den Nutzsignalfiltern 23 zur Bildung des S/N-Verhältnisses nahe des Hörfrequenzbereichs
Fig. 7: Scanning-Antennen-Diversitysystem nach Fig. 6 mit zusätzlicher analoger S/N-Ermittlung und Beurteilung der Hörqualität 16 an Hand einer vorgegebenen Nutz-Stör-Verhältnisschwelle 24 zur Steuerung verschiedener Betriebsmodi

Im Rahmen dieser Erfindung wird vorgeschlagen, zusätzlich einen zweiten Störungsdetektor 7 zur Erkennung von Rauschstörungen einzusetzen und dessen Ausgangssignal als Störungsanzeige 11 einer Logikschaltung 8 zusammen mit der Momentanstörungsanzeige 10 des ersten Störungsdetektors 6 zuzuführen. In der Logikschaltung 8 werden die Momentanstörungsanzeige 10 und die Störungsanzeige 11 entsprechend bewertet, dergestalt, dass auch bei Auftreten einer Rauschstörung das die Rauschstörung zuerst erkennende Signal, entweder die Momentanstörungsanzeige 10 oder die Störungsanzeige 11 über die Logikschaltung 8 und das logische Steuersignal 12 die logische Schalteinrichtung 2 zu einer anderen Schaltstellung veranlasst und damit ein anderes diversitätsmäßiges hochfrequentes Empfangssignal 5 aufgeschaltet wird.

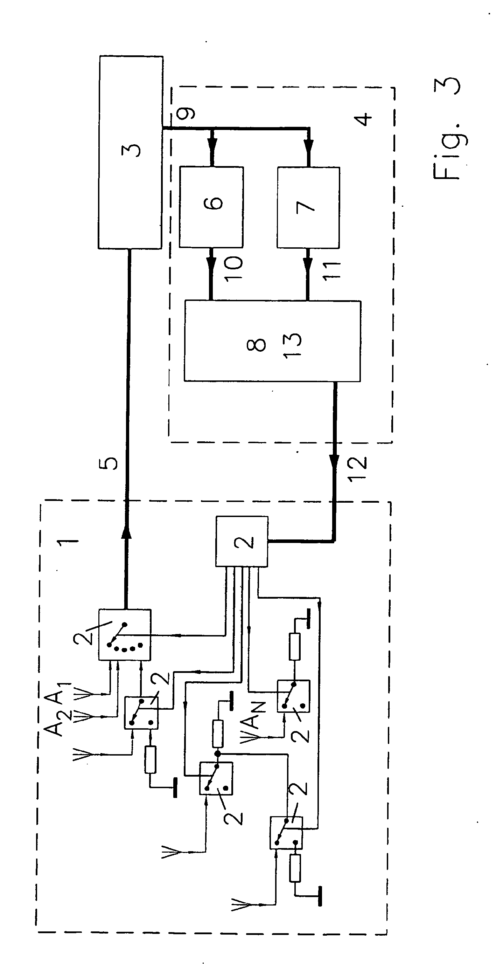

In Fig. 3 ist eine Anordnung gemäß der vorliegenden Erfindung dargestellt. Die logische Schalteinrichtung 2 wird vom logischen Steuersignal 12 entweder derart gesteuert, dass ein Weiterschaltbefehl ein sequentiell neues hochfrequentes Empfangssignal 5 zum Empfänger 3 liefert oder in einer vorteilhaften Ausgestaltung der vorgeschlagenen Erfindung mit adressierbaren Schaltstellungen ausgestattet ist, so dass das logische Steuersignal 12 als ein Adresssignal gestaltet ist und mit jedem Schaltbefehl ein speziell ausgewähltes hochfrequentes Empfangssignal 5 zum Empfänger 3 durchgeschaltet ist, z.B. indem andere Antennen mit Blindelementen beschaltet werden.

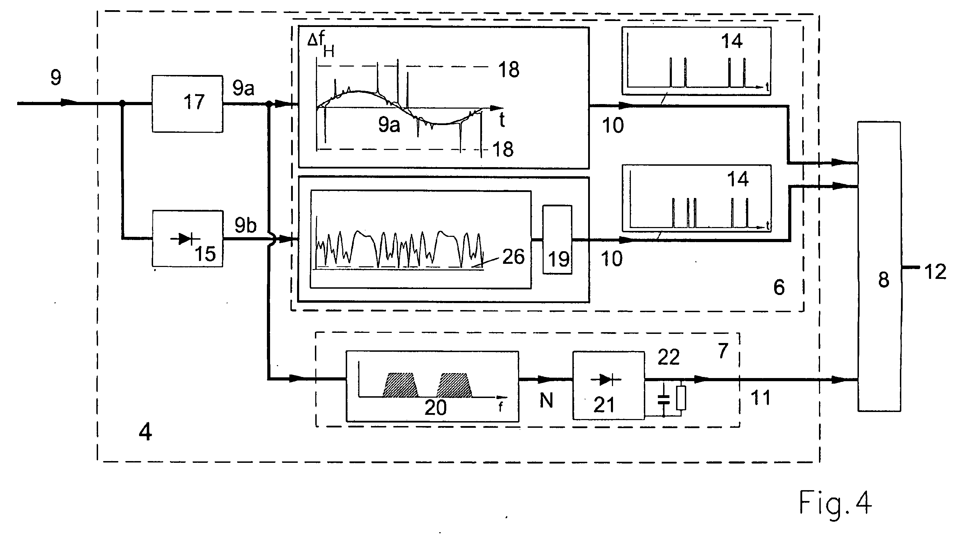

In Fig. 4 ist ein erfindungsgemäßer Diversityprozessor 4 detailliert dargestellt. Dieser besteht aus der Kombination eines schnell anzeigenden ersten Störungsdetektors 6 sowie dem zweiten Störungsdetektor 7. Im Empfänger 3, bzw. wie hier in Fig. 4, ist im Diversityprozessor 4 der FM-Demodulator 17 enthalten, dessen Ausgangssignal über einen Entscheider an der Frequenzabweichungsschwelle 18 gemessen wird, so dass bei Überschreiten der zulässigen Frequenzabweichung die Momentanstörungsanzeige 10 als Binärsignal 14 vorliegt. Der erste auftretende Puls im Binärsignal 14 nach Auftreten einer Störung ist demnach der frühestmögliche Zeitpunkt zur Feststellung einer Frequenzabweichungsstörung. Auf ähnliche Weise kann dasselbe ZF-Empfangssignal 9 mit dem AM-Gleichrichter 15 gleichgerichtet werden und das ZF-Empfangssignal 9 auf Amplitudeneinbrüche und bezüglich des Überschreitens der zulässigen Amplitudenstörmodulationsschwelle 26 mit Hilfe des Störamplitudenmodulationsindikators 19 untersucht werden. In besonders wirkungsvollen Ausführungsformen eines solchen momentan anzeigenden ersten Störungsdetektors 6 wird dann eine Störung erkannt, wenn sowohl ein Puls durch Überschreiten der Frequenzabweichungsschwelle 18 als auch ein Puls durch Überschreiten der Amplitudenstörmodulationsschwelle 26 gleichzeitig auftritt, was in Fig. 4 gleichwertig z.B. auch in der Logischaltung 8 erfolgt.

Die Ausgangssignale aus dem ersten Störungsdetektor 6 werden als Momentanstörungsanzeigen 10 der Logikschaltung 8 zugeführt und können dort für die Meldung einer Störung über das logische Steuersignal 12 ausgewertet werden. Aufgrund des geschilderten Sachverhalts, dass Rauschstörungen nur über auftretende Rauschspitzen und deshalb aufgrund deren Seltenheit in nur schwach verrauschten Signalen zu spät zu einer Momentanstörungsanzeige 10 führen, ist es das Wesen der vorliegenden Erfindung, diesen ersten Störungsdetektor 6 durch einen zweiten Störungsdetektor 7 zu ergänzen, welcher auch bei weniger verrauschten Signalen in möglichst kurzer Zeit die Störung zur Anzeige bringt.

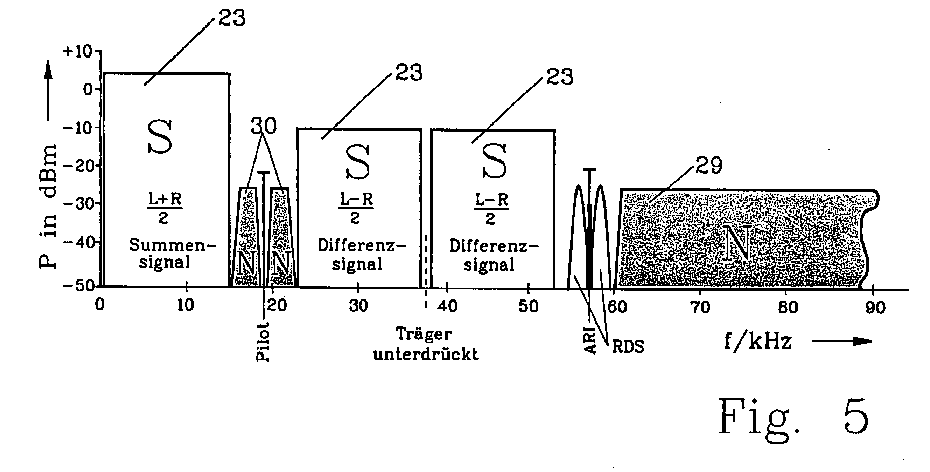

Gemäß der vorliegenden Erfindung beruht das Arbeitsprinzip des zweiten Störungsdetektors 7 auf der Auswertung von Störenergie in Frequenzbereichen, die in gemäss der Signalnormung des FM-Multiplexsignals des FM-demodulierten ZF-Empfangssignals 9a frei von Energie sein sollten. Das FM-Multiplexsignal ist mit den Zusatzsignalen in Fig. 5 dargestellt. Die Bandbreite dieser Frequenzlücken, in Fig. 5 durch "N" gekennzeichnet, ist zwar wesentlich geringer als die gesamte ZF-Bandbreite, so dass eine Auswertung der darin enthaltenen Störsignale im Hinblick auf die Detektionszeit eingeengt ist. Der Vorteil der Störungsermittlung in diesen Frequenzlücken besteht jedoch darin, dass sie ohne Präsenz des Signals und somit getrennt davon erfolgen kann. Dies steht im Gegensatz zur Wirkungsweise eines Detektors der Bauart des ersten Störungsdetektors 6, bei dem Störungen erst feststellbar sind, wenn das momentane Gesamtsignal entweder hinsichtlich seiner Frequenzabweichung oder hinsichtlich der Trägeramplitude um ein nicht tolerierbares Maß abweicht. Die Feststellung der Störung erfolgt erfindungsgemäß (Fig. 4) durch Gleichrichtung der Signale in diesen Frequenzlücken mit Hilfe der Gleichrichterschaltung 21 mit nachgeschaltetem Integrationsglied 22 mit geeignet gewählter Zeitkonstante. Bei den verfügbaren Bandbreiten der Frequenzlücken erreichen Störungsdetektoren dieser Art eine Erkennungszeit für Störungen, die in diesen Frequenzlücken auftreten, von ca. Δt = 1 bis 5 ms.

Bei Auswertung der Störsignale im Frequenzbereich oberhalb 60 kHz lassen sich aufgrund der größeren verfügbaren Bandbreite Erkennungszeiten Δt < 1 ms erreichen. Die sichere Einhaltung dieser Erkennungszeit ist auf die zeitlich integrale Erfassung der Störsignalinhalte in gemäß der Signalnormung des FM-Multiplexsignals des FM-demodulierten ZF-Empfangssignals 9a vom Nutzsignal frei gehaltenen Frequenzlücken zurück zu führen. Die zeitlich integrale Erfassung nach Gleichrichtung dieses Signals bewirkt bei plötzlich auftretendem Rauschen die summierende Auswertung der Frequenzabweichung unabhängig von deren Augenblicksgröße. Die Auswertung ist somit nicht - wie im ersten Störungsdetektor 6 - auf die statistisch und nach einer gewissen Wahrscheinlichkeit auftretenden Überschreitung einer eine vorgegebene Schwelle überschreitende Frequenzabweichung angewiesen. Vielmehr werden alle Störinhalte aufsummiert und können - je nach Anwendung - z.B. bei Erreichen einer vorgegebenen Schwelle als binär anzeigendes Störsignal oder als Mittelwert an einem Integrationsglied 22 mit Zeitkonstante als Maß für die mittlere Störung verwendet werden. Der aufgrund seiner zeitlich integrierenden Eigenschaft als langsamer vermutete Störungsdetektor 7 kann somit im Hinblick auf ein plötzlich auftretendes verrauschtes Signal, dieses um Größenordnungen schneller anzeigen als der als schnell vermutete Störungsdetektor 6 mit seiner an das momentane Überschreiten einer Frequenzabweichungsschwelle 18 gebundenen Momentanstörungsanzeige 10. Mit Hilfe der vorliegenden Erfindung ist es somit entgegen der Erwartung, durch Beistellung des als langsam vermutet arbeitenden Störungsdetektortyps zu dem als schnell arbeitend vermuteten Störungsdetektortyps einen Diversityprozessor 4 zu gestalten, welcher für alle Störungsarten auch unter Einbeziehung schwach verrauschter Signale eine kürzest mögliche Störerkennungszeit ermöglicht.

Ein Vergleich mit den in Fig. 2c dargestellten Erkennungszeiten für Störungen im ersten Störungsdetektor 6 und einer der Norm entsprechenden maximalen Frequenzabweichungsschwelle ergibt somit eine wesentlich kürzere Erkennungszeit für Rauschstörungen mit einem (S/N)_{HF} = (S/N)_{ZF} > 9dB. Die daraus resultierende Störungsanzeige 11 wird ebenfalls an die Logikschaltung 8 weitergeleitet, worin zum frühestmöglichen Zeitpunkt und in der Praxis ausreichend schnell ein logisches Steuersignal 12 zur Wahl eines anderen hochfrequenten Empfangssignals 5 erzeugt ist. Die in den Frequenzlücken auftretenden Störungen sind im Übrigen nicht nur durch Rauschen, sondern auch durch lineare Verzerrungen des Nutzsignals in diesen Frequenzgebieten bedingt. Diese entstehen z.B. durch frequenzabhängige Gruppenlaufzeiten, welche im Mehrwegeempfangsgebiet, insbesondere aufgrund der Überlagerung von elektromagnetischen Wellen mit nicht vernachlässigbar unterschiedlichen Laufzeiten, entstehen.

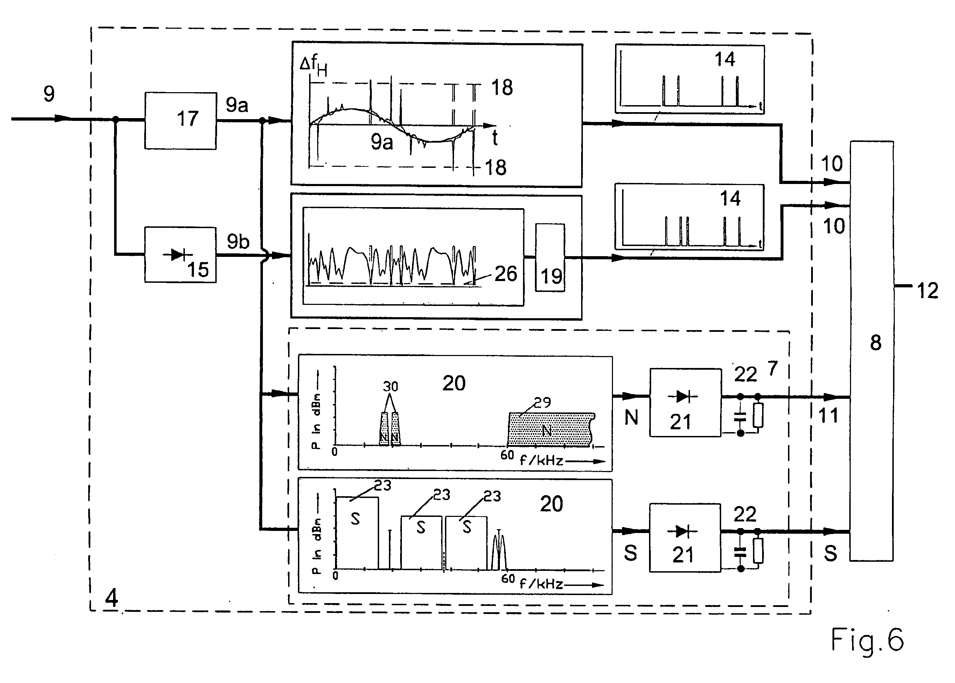

Für die Auswertung der Störungen N in Fig. 5 ist erfindungsgemäß zum einen der Frequenzbereich zwischen dem Frequenzbereich für das Summensignal und dem Frequenzbereich für den Differenzkanal und zum anderen der Frequenzbereich oberhalb des Frequenzbereichs für den Differenzkanal bzw. oberhalb des RDS-Kanals, d.h. oberhalb ca. 60 kHz, geeignet. Zweckmäßigerweise erfolgt, wie in Fig. 6 dargestellt, die Auskopplung der Störungsinhalte N oberhalb von 60 kHz mit Hilfe eines Hochpasses 29 und die Auskopplung des Frequenzbereichs zwischen ca. 15 kHz und 23 kHz mit Hilfe eines Bandpasses 30 mit Frequenzfalle für den Pilotton (19 kHz).

Mit einem erfindungsgemäßen kombinierten Diversityprozessor 4 (Fig. 6) werden zusätzlich die Nutzsignalinhalte S mit Hilfe von Nutzsignalfiltem 23 im Frequenzfilter 20 aus dem in gemäss der Signalnormung des FM-Multiplexsignals des FM-demodulierten ZF-Empfangssignals 9a für das Nutzsignal gestalteten Frequenzbereichen gewonnen. Mit Hilfe von je einer Gleichrichterschaltung 21 mit Integrationsglied 22 mit geeigneter Zeitkonstante stehen dann sowohl die Nutzsignalenergie S als. auch die Störungsinhalte N getrennt zur Verfügung, so dass daraus das Nutz-Stör-Verhältnis S/N ermittelt und in der Logikschaltung 8 als Maß für die Beurteilung der Hörsignalqualität 16 zur Verfügung steht. Mit der Störungsanzeige 11 des zweiten bzw. der Momentanstörungsanzeige 10 des ersten jeweils in analoger Technik ausgeführten Störungsdetektors 7 bzw. 6 kann z.B. bei Einsatz eines programmierbaren Mikroprozessors 13 mit eingangsseitiger A/D-Wandlung für die Logikschaltung 8 im Rechenprogramm vorteilhaft eine Nutz-Störverhältnis-Schwelle 24 gegeben sein, anhand derer der Programmablauf gewählt ist, welcher die Momentanstörungsanzeige 10 und die Störungsanzeige 11 nach Größe und Zeitablauf bewertet, um unter logischer Verknüpfung dieser Bewertungen Umschaltbefehle mit Hilfe des logischen Steuersignals 12 zu gestalten.

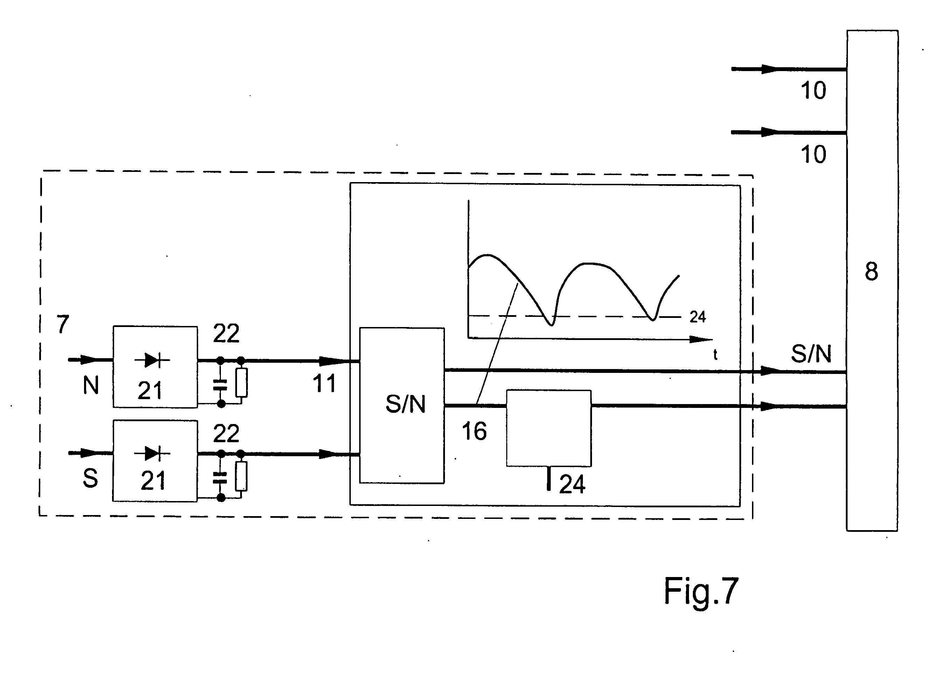

In einer weiteren beispielhaften Ausgestaltung des zweiten Störungsdetektors 7 erfolgt in Fig. 7 die S/N-Bildung in einem analog arbeitenden Block, an dessen Ausgang das Signal für die Hörsignalqualität 16 vorliegt, wobei in einem anschließenden Entscheider die Binärinformation bezüglich der Überschreitung einer vorgegebenen Nutz-Störverhältnis-Schwelle 24 ermittelt und ein entsprechendes Signal an die Logikschaltung 8 abgegeben wird.

In einer besonders vorteilhaften Ausgestaltung der vorliegenden Erfindung werden die Anzeigen des zweiten Störungsdetektors 7 zur Steuerung unterschiedlicher Betriebsmoden des Diversity-Systems verwendet. Hierbei wird das mit Hilfe des zweiten Störungsdetektors 7 ermittelte Nutz-Störverhältnis S/N zur Überwachung der Hörsignalqualität 16 und zur Umsteuerung verschiedener Betriebsmoden des Systems verwendet. Beispiele für solche Moden sind in den Unteransprüchen beschrieben.

Bei zu häufigem Wechsel der hochfrequenten Empfangssignale 5 in Gebieten, die durch zu schwache Pegel oder zu große Laufzeitdifferenzen der im Rayleigh-Empfangsfeld einfallenden Wellen gekennzeichnet sind, überlagert sich dem Empfangssignal auf der NF-Ebene ein deutlich wahrnehmbares Störsignal in Form eines "Prasselns". Dieser Störeindruck ist z.B. abhängig von der Fahrgeschwindigkeit, aber auch insbesondere im stehenden Fahrzeug deutlich wahrnehmbar und störend, da die während der Fahrt sonst vorhandenen Fahrgeräusche entfallen. Der Anspruch an die Hörqualität ist demnach aufgrund der Fahrgeräusche, wie z. B. Windgeräusche oder durch den Straßenbelag verursachte Geräusche sowie Motorgeräusche, welche diese "Prasselgeräusche" teilweise überdecken, weniger groß als bei langsamer Fahrt.

In einer besonders vorteilhaften Ausgestaltung der Erfindung wird deshalb zur Programmsteuerung das im Mikroprozessor 13 vorhandene Nutz-Störverhältnis S/N, welches die Hörsignalqualität 16 repräsentiert, zur Überwachung der dynamischen Steuerung des Scanning-Antennen-Diversitysystems eingesetzt. Die Anzeigegeschwindigkeit für das Nutz-Störverhältnis S/N des zweiten Störungsdetektors 7 ist für diese Steuerung auch bei höchsten Fahrgeschwindigkeit im FM-Rayleigh-Empfangsfeld vollständig ausreichend.

In einer beispielhaften vorteilhaften Ausführungsform dieser Steuerung werden folgende Betriebsmoden beschrieben:

### Gut versorgte Rundfunkempfangsgebiete:

### (ausreichende mittlere Hörsignalqualität 16; das Nutz-Störverhältnis ist im Mittel hinreichend groß.)

### Störungsanzeigemodus:

Im Störungsanzeigemodus bewirkt der erste Störungsdetektor 6 mit seiner Momentanstörungsanzeige 10 bei Überschreiten der Frequenzabweichungsschwelle 18 bzw. und/oder der Amplitudenstörmodulationsschwelle 26, dass auf ein anderes vorgegebenes hochfrequentes Empfangssignal 5 umgeschaltet wird; ebenso erfolgt eine Umschaltung, wenn das Nutz-Störverhältnis S/N die Nutz-Störverhältnis-Schwelle 24 durch Störungsanzeige 11 durch den zweiten Störungsdetektor 7 zum Zeitpunkt t₁ momentan unterschreitet, jedoch nur dann, wenn der erste Störungsdetektor 6 im Zeitraum t₁- Δt < t < t₁ keine Störung angezeigt hat, wobei Δt die Erkennungszeit des zweiten Störungsdetektors 7 ist.

### Aktualisierungszyklus:

Das System ist in den o.g. Störungsanzeigemodus geschaltet und die verfügbaren hochfrequenten Empfangssignale 5 werden zyklisch angewählt und
a) die Hörsignalqualität 16 jeweils während der Anschaltzeit eines Signals mit Hilfe des zweiten Störungsdetektors 7 festgestellt und im Speicher des Mikroprozessors 13 abgelegt und der Qualität nach sortiert, so dass eine Rangliste der hochfrequenten Empfangssignale 5 gebildet ist, oder
b) die Hörsignalqualität 16 anhand der gemessenen Zeitlängen, d.h. der Anschaltzeiten des jeweils angeschalteten hochfrequenten Empfangssignals 5 und der Bewertung der Anschaltzeit als Hörqualität festgestellt ist und diese für die einzelnen Signale im Speicher des Mikroprozessors 13 abgelegt und der Qualität nach sortiert ist, so dass eine Rangliste der hochfrequenten Empfangssignale 5 gebildet ist.

### Signalselektionsmodus:

Das System ist in den o.g. Störungsanzeigemodus geschaltet und die verfügbaren hochfrequenten Empfangssignale 5 werden aus der Rangliste derart angewählt, dass das Signal mit der jeweils besten Hörsignalqualität 16 bei Weiterschaltung selektiert wird.

### Momentanschaltmodus:

Ein vorteilhafter Programmablauf ist somit dadurch gegeben, dass das System im Signalselektionsmodus betrieben ist und in geeignet gewählten Zeitabständen 28 durch den Aktualisierungszyklus unterbrochen ist und nach dessen Durchlaufen der Signalselektionsmodus jeweils wieder aktiviert ist. Die Zeitabstände 28 werden in einer vorteilhaften Ausgestaltung der Erfindung an die durch die Fahrgeschwindigkeit gemäß der Rayleigh-Feldverteilung sich ändernde Amplitude des hochfrequenten Empfangssignals 5 angepasst und mit wachsender Fahrgeschwindigkeit kürzer gewählt. In einer weiteren vorteilhaften Ausgestaltung der Erfindung werden die Zeitabstände 28 aus den ermittelten Zeitintervallen zwischen Signalumschaltungen abgeleitet in der Weise, dass bei kürzeren ermittelten Zeitintervallen kleinere Zeitabstände 28 zur häufigeren Aktualisierung der Rangliste der hochfrequenten Empfangssignale 5 eingestellt werden.

### Schlecht versorgte Rundfunkempfangsgebiete:

### (Die Hörsignalqualität 16 ist nicht ausreichend; das Nutz-Störverhältnis ist im Mittel zu klein)

### S/N-Modus :

In solchen Empfangsgebieten haben Störungsdetektoren vom Typ des ersten Störungsdetektors 6 die Tendenz, zu häufig Störungen anzuzeigen. In diesen Fällen ist es häufig vorteilhaft, die Logikschaltung 8 derart zu gestalten, dass bei Feststellung einer zu geringen zeitlich gemittelten Hörsignalqualität 16 durch den zweiten Störungsdetektor 7 in Verbindung mit in zu kleinen Zeitintervallen aufeinanderfolgenden Momentanstörungsanzeigen 10, letztere bei der Bildung des logischen Steuersignals 12 unberücksichtigt bleiben und das logische Steuersignal 12 ausschließlich aus der Störungsanzeige 11 des zweiten Störungsdetektors 7 abgeleitet ist.

### S/N-Aktualisierungszyklus:

Das System ist in den o.g. S/N-Modus geschaltet und die verfügbaren hochfrequenten Empfangssignale 5 werden zyklisch angewählt und die Steuerung des Systems kann vorteilhaft analog zu dem wie unter dem oben angegebenen Aktualisierungszyklus a) oder b) anhand der Hörsignalqualität 16 erfolgen.

### S/N-Signalselektionsmodus:

Das System ist in den o.g. S/N-Modus geschaltet und die verfügbaren hochfrequenten Empfangssignale 5 werden aus der Rangliste derart angewählt, dass das Signal mit der jeweils besten Hörsignalqualität 16 bei Weiterschaltung selektiert wird.

### S/N-Schaltmodus:

Bei zu kleinem mittleren Nutz-Störverhältnis S/N ist es vorteilhaft, einen zum o.g. Momentanschaltmodus analogen Programmablauf einzustellen, in welchem das System im S/N-Signalselektionsmodus betrieben ist und in geeignet gewählten Zeitabständen 28 durch den S/N-Aktualisierungszyklus unterbrochen ist und nach dessen Durchlaufen der S/N-Signalselektionsmodus jeweils wieder aktiviert ist. Die Zeitabstände 28 werden wie oben genannt, geeignet gewählt und gegebenenfalls dynamisch eingestellt.

### Liste der Bezeichnungen

Antennenanlage 1
logische Schalteinrichtung 2
Empfänger 3
Diversityprozessor 4
hochfrequentes Empfangssignal 5
erster Störungsdetektor 6
zweiter Störungsdetektor 7
Logikschaltung 8
ZF-Empfangssignals 9
FM-demoduliertes ZF-Empfangssignal 9a
AM-demoduliertes ZF-Empfangssignal 9b
Momentanstörungsanzeige 10
Störungsanzeige 11
logisches Steuersignal 12
Mikroprozessor 13
Binärsignal 14
AM-Gleichrichter 15
Hörsignalqualität 16
FM-Demodulator 17
Frequenzabweichungsschwelle 18
Störamplitudenmodulationsindikator 19
Frequenzfilter 20
Gleichrichterschaltung 21
Integrationsglied 22
Nutzsignalfilter 23
Nutz-Störverhältnis-Schwelle 24
Wartezeit 25
Amplitudenstörmodulationsschwelle 26
adressierbare Schaltzustände 27
Zeitabstand 28
Hochpass 29
Bandpass 30

## Patentansprüche

1. Scanning-Antennen-Diversitysystem für den FM-Hörrundfunk für Fahrzeuge mit einer Antennenanlage (1) mit steuerbarer logischer Schalteinrichtung (2), bei der mit unterschiedlichen Schaltstellungen jeweils ein diversitätsmäßig unterschiedliches hochfrequentes Empfangssignal (5) einem Empfänger (3) zugeführt ist und ein aus diesem Empfangssignal (5) abgeleitetes ZF-Empfangssignal (9) einen Diversityprozessor (4) ansteuert, der bei Vorliegen einer Empfangsstörung die logische Schalteinrichtung (2) in eine andere Schaltstellung weiterschaltet,
**dadurch gekennzeichnet, dass**
im Diversityprozessor (4)
- ein erster Störungsdetektor (6) vorhanden ist, dessen Momentanstörungsanzeige (10) verzögerungsfrei aus dem zeitlichen Momentanwert des auf die ZF-Bandbreite begrenzten ZF-Empfangssignals (9) des Empfängers (3) durch Feststellung des störungsbedingten Auftretens unzulässiger Momentanwerte der Frequenz und der Amplitude dieses Signals gewonnen ist
- und ein zweiter Störungsdetektor (7) vorhanden ist, dessen Störungsanzeige (11) aus demselben ZF-Empfangssignal (9), jedoch aus der zeitlich integralen Erfassung der Störsignalinhalte in gemäss der Signalnormung des FM-Multiplexsignals des FM-demodulierten ZF-Empfangssignals (9a) vom Nutzsignal frei gehaltenen Frequenzlücken gewonnen ist
- deren beider Störungsanzeigesignale (10,11) einer Logikschaltung (8) zugeleitet sind, welche derart gestaltet ist, dass in ihr durch Auswertung der Störungsanzeigesignale (10,11) beider Störungsdetektoren (6,7) ein logisches Steuersignal (12) zur Steuerung der Antennenanlage (1) mit steuerbarer logischer Schalteinrichtung (2) gebildet ist, so dass zum frühest möglichen Zeitpunkt nach Auftreten eines empfangsunwürdig gewordenen Empfangssignals (5) eine andere Schaltstellung gewählt ist.

2. Scanning-Antennen-Diversitysystem nach Anspruch 1
**dadurch gekennzeichnet, dass**
die Logikschaltung (8) durch einen programmierbaren Mikroprozessor (13) gebildet ist, dessen Ablaufprogramm auf der Bewertung der Störungsanzeigesignale (10,11) nach Größe und Zeitablauf unter Berücksichtigung von deren bekannten unterschiedlichen Charakteristiken bezüglich der unterschiedlichen Störungsursachen und unter logischer Verknüpfung dieser Bewertungen zur Bildung der Umschaltbefehle im logischen Steuersignal (12) aufgebaut ist.

3. Scanning-Antennen-Diversitysystem nach Anspruch 2
**dadurch gekennzeichnet, dass**
beide Störungsdetektoren (6,7) in analoger Technik ausgeführt sind und die aus dem FM-demodulierten ZF-Empfangssignal (9a) gewonnene Momentanstörungsanzeige (10) des ersten Störungsdetektors (6) und die Störungsanzeige (11) des zweiten Störungsdetektors (7) nach einer Analog/Digital-Umwandlung in einem digital arbeitenden programmierbaren Mikroprozessor (13) entsprechend einem geeignet gestalteten Protokoll zur Gestaltung des logischen Steuersignals (12) ausgewertet sind.

4. Scanning-Antennen-Diversitysystem nach einem der Ansprüche 1 bis 3
**dadurch gekennzeichnet, dass**
im ersten Störungsdetektor (6) ein FM-Demodulator (17) mit Frequenzabweichungsschwelle (18), welche der für ein ungestörtes hochfrequentes Empfangssignal (5) maximal zulässigen Frequenzabweichung entspricht, vorhanden ist, dessen Momentanstörungsanzeige (10) aus der die Frequenzabweichungsschwelle (18) überschreitenden momentanen Frequenzabweichung durch das Auftreten einer im Gesamtsignal innerhalb einer Störungserkennungszeit tₛ von maximal nur wenigen Vielfachen der reziproken ZF-Bandbreite mit tₛ < 100 µsec gebildet ist.

5. Scanning-Antennen-Diversitysystem nach einem der Ansprüche 1 bis 3
**dadurch gekennzeichnet, dass**
im ersten Störungsdetektor (6) ein AM-Gleichrichter (15) mit Störamplitudenmodulationsindikator (19) vorhanden ist, dessen Momentanstörungsanzeige (10) aus dem Auftreten einer Amplitudenstörmodulation im Gesamtsignal innerhalb einer Störungserkennungszeit tₛ von maximal nur wenigen Vielfachen der reziproken ZF-Bandbreite mit tₛ < 100 µsec gebildet ist.

6. Scanning-Antennen-Diversitysystem nach Anspruch 2 und 4
**dadurch gekennzeichnet, dass**
im ersten Störungsdetektor (6) ein FM-Demodulator (17) mit Frequenzabweichungsschwelle (18) und ein AM-Gleichrichter (15) mit Störamplitudenmodulationsindikator (19) vorhanden sind und die Momentanstörungsanzeige (10) aus dem gleichzeitigen Auftreten der störungsbedingten Frequenzabweichung und der Amplitudenstörmodulation gebildet ist.

7. Scanning-Antennen-Diversitysystem nach einem der Ansprüche 1 bis 6
**dadurch gekennzeichnet, dass**
im zweiten Störungsdetektor (7) mindestens ein Frequenzfilter (20) zur Auskopplung von Störsignalen in einem gemäss der Signalnormung des FM-Multiplexsignals des FM-demodulierten ZF-Empfangssignals (9a) vom Nutzsignal frei gehaltenen Frequenzlücke vorhanden ist und die in den Störsignalen enthaltene Störenergie durch zeitliche Integration zur Bildung des Störungsanzeigesignals (11) innerhalb einer Zeit von t_{q} < 10 ms ausgewertet ist.

8. Scanning-Antennen-Diversitysystem nach Anspruch 7
**dadurch gekennzeichnet, dass**
das Frequenzfilter (20) als Hochpass (29) zur Auskopplung von Störsignalen im Frequenzbereich oberhalb der höchsten im standardisierten FM-Multiplexsignal vorkommenden Frequenz gestaltet ist, dessen untere Grenzfrequenz zur Erfassung aller Störungen hinreichend niedrig und die Flankensteilheit zur Unterdrückung des Nutzsignalinhalts am Filterausgang hinreichend groß gewählt sind.

9. Scanning-Antennen-Diversitysystem nach Anspruch 7
**dadurch gekennzeichnet, dass**
das Frequenzfilter (20) als kombiniertes Filter, bestehend aus Bandpässen (30) in den Durchlassfrequenzbereichen 15kHz < f < 19kHz und 19kHz < f < 23kHz sowie aus einem Hochpass mit 57 kHz < f gestaltet ist.

10. Scanning-Antennen-Diversitysystem nach Anspruch 7
**dadurch gekennzeichnet, dass**
das Frequenzfilter (20) zur Auswertung der Störsignale in den Frequenzbereichen 15kHz < f < 19kHz und 19kHz < f < 23kHz durch Frequenzumsetzung mit einer Trägerschwingung auf der Pilottonfrequenz mit nachgeschaltetem Tiefpass mit der Grenzfrequenz < 4kHz gebildet ist.

11. Scanning-Antennen-Diversitysystem nach einem der Ansprüche 7 bis 10
**dadurch gekennzeichnet, dass**
zur Auswertung der in den Störsignalen auftretenden Störenergie N eine Gleichrichterschaltung (21) mit Integrationsglied (22) verwendet ist.

12. Scanning-Antennen-Diversitysystem nach einem der Ansprüche 1 bis 3 und 7 bis 11
**dadurch gekennzeichnet, dass**
ein Nutzsignalfilter (23) zur Auskopplung von Nutzsignalinhalten S aus dem FM-demodulierten ZF-Empfangssignal (9a) auf gemäss der Signalnormung des FM-Multiplexsignals des FM-demodulierten ZF-Empfangssignals (9a) für die Übertragung von Nutzsignalen vorgesehenen Frequenzen zur zeitlich integralen Erfassung der Nutzsignalenergie S vorhanden ist und das Nutz-Störverhältnis S/N in einer Zeit von t_{q} < 10 ms nach Auftreten der Störung ermittelt und in der Logikschaltung (8) in die Gestaltung des logischen Steuersignals (12) mit einbezogen ist.

13. Scanning-Antennen-Diversitysystem nach Anspruch 12
**dadurch gekennzeichnet, dass**
eine Nutz-Störverhältnis-Schwelle (24) vorgegeben ist und die Logikschaltung (8) derart gestaltet ist, dass bei Feststellung der Unterschreitung des Nutz-Störverhältnisses S/N von dieser Schwelle zum Zeitpunkt t₁ ein logisches Steuersignal (12) generiert ist, welches nur dann eine Weiterschaltung der logischen Schalteinrichtung (2) veranlasst, wenn der erste Störungsdetektor (6) im Zeitraum t₁ - Δt < t < t₁ keine Störung angezeigt hat, wobei Δt durch die Erkennungszeit des zweiten Störungsdetektors (7) gegeben ist, Störungsanzeigemodus.

14. Scanning-Antennen-Diversitysystem nach Anspruch 1
**dadurch gekennzeichnet, dass**
im ersten Störungsdetektor (6) die Momentanstörungsanzeige (10) als ein Binärsignal (14) gegeben ist und die Frequenzabweichungsschwelle (18) in der Weise variabel gestaltet ist, dass sie abhängig vom aktuellen, über eine geeignet eingestellte Integrationszeit zeitlich gemitteltem Modulationshub eingestellt ist und mit wachsendem Modulationshub nach einer vorgegebenen Funktion angehoben ist.

15. Scanning-Antennen-Diversitysystem nach Anspruch 14 in Verbindung mit einem der Ansprüche 5 bis 6
**dadurch gekennzeichnet, dass**
eine Amplitudenstörmodulationsschwelle (26) und die Störungsanzeige (11) als Binärsignal (14) bei Überschreitung dieser Schwelle gegeben ist und die Momentanstörungsanzeige (10) durch das gleichzeitige Auftreten der Überschreitung der Frequenzabweichungsschwelle (18) und der Amplitudenstörmodulationsschwelle (26) als ein Binärsignal (14) gegeben ist.

16. Scanning-Antennen-Diversitysystem nach Anspruch 15
**dadurch gekennzeichnet, dass**
die Amplitudenstörmodulationsschwelle (26) in der Weise variabel gestaltet ist, dass sie abhängig vom aktuellen, über eine geeignet eingestellte Integrationszeit gemitteltem AM-demodulierten ZF-Empfangssignal (9b) des ZF-Empfangssignals (9) eingestellt ist und mit wachsender Größe dieses Signals die Amplitudenstörmodulationsschwelle (26) nach einer vorgegebenen Funktion angehoben ist.

17. Scanning-Antennen-Diversitysystem nach Anspruch 14 und 15
**dadurch gekennzeichnet, dass**
die Zeitintervalle zwischen den aufeinanderfolgenden Überschreitungen der Frequenzabweichungsschwelle (12) oder/und der Amplitudenstörmodulationsschwelle (26) im ersten Störungsdetektor (6) in der Logikschaltung (8) erfasst sind und als Kriterium für die Qualität des hochfrequenten Empfangssignals (5) benutzt sind und zur Reduzierung der Schaltunruhe die Frequenzabweichungsschwelle (12) oder/und die Amplitudenstörmodulationsschwelle (26) mit kürzer werdenden Zeitintervallen angehoben wird bzw. werden.

18. Scanning-Antennen-Diversitysystem nach Anspruch 1 und 2
**dadurch gekennzeichnet, dass**
der erste Störungsdetektor (6) durch den Prozessor vom Typ TEA 6101 der Fa. Philips bzw. durch einen, nach einem ähnlichen Prinzip gestalteten Prozessor dargestellt ist.

19. Scanning-Antennen-Diversitysystem nach Anspruch 14 und 15
**dadurch gekennzeichnet, dass**
die aktuellen zeitlichen Mittelwerte des FM-demodulierten ZF-Empfangssignals (9a) und des AM-demodulierten ZF-Empfangssignals (9b) dem Mikroprozessor (13) zugeführt, dort A/D-gewandelt und mit Hilfe eines Rechenprogramms und anschließender D/A-Wandlung Signale erzeugt sind, die dem ersten Störungsdetektor (6) zur Steuerung der Frequenzabweichungsschwelle (12) und der Amplitudenstörmodulationsschwelle (26) zugeführt sind.

20. Scanning-Antennen-Diversitysystem nach einem der Ansprüche 1 bis 19
**dadurch gekennzeichnet, dass**
das System in einem Signalselektionsmodus arbeitet, in welchem in der logischen Schalteinrichtung (2) adressierbare Schaltzustände (27) vorgesehen sind und beim Betrieb des Systems gemäß Anspruch 13 für die verschiedenen Schaltzustände (27) die aktuellen Zeitintervalle zwischen den aufeinanderfolgenden Umschaltungen der logischen Schalteinrichtung (2) für die verschiedenen Schaltzustände (27) als Kriterium für die Qualität des hochfrequenten Empfangssignals (5) gesondert festgestellt sind und die Logikschaltung (8) als Mikroprozessor (13) mit Speicher- und Sortierfunktion ausgeführt ist, mit dessen Hilfe eine Rangliste der den adressierbaren Schaltzuständen (27) zugeordneten hochfrequenten Empfangssignale (5) im Hinblick auf die Qualität dieser Signale gebildet ist und bei Auftreten einer Momentanstörungsanzeige (10) oder einer Störungsanzeige (11) über ein entsprechend generiertes Adresssignal ein nächster Schaltzustand (27) entsprechend der nächsten Position in der Rangliste gewählt ist Selektionsmodus.

21. Scanning-Antennen-Diversitysystem nach Anspruch 20
**dadurch gekennzeichnet, dass**
jedoch für die verschiedenen Schaltzustände (27) als Kriterium für die Qualität des hochfrequenten Empfangssignals (5) die Hörqualität gemäß Anspruch 23 mit Hilfe des zweiten Störungsdetektors (7) gesondert festgestellt ist und die Rangliste der den adressierbaren Schaltzuständen (27) zugeordneten hochfrequenten Empfangssignale (5) im Hinblick auf die Qualität dieser Signale gebildet ist.

22. Scanning-Antennen-Diversitysystem nach Anspruch 20
**dadurch gekennzeichnet, dass**
das System in einem Aktualisierungszyklus arbeitet, in welchem zur Aktualisierung der Rangliste die adressierbaren Schaltzustände (27) jeweils bei Auftreten einer Momentanstörungsanzeige (10) im ersten Störungsdetektor (6) oder einer Störungsanzeige (11) im zweiten Störungsdetektor (7) zyklisch auf einen anderen adressierbaren Schaltzustand (27) weitergeschaltet ist, solange, bis alle adressierbaren Schaltzustände (27) angewählt und die aktuellen Zeitintervalle mindestens einmal sicher erfasst sind, Aktualisierungsmodus.

23. Scanning-Antennen-Diversitysystem nach einem der Ansprüche 1 bis 22
**dadurch gekennzeichnet, dass**
durch das aus dem im zweiten Störungsdetektor (7) ermittelte Nutz-Störverhältnis S/N über eine Bewertungsfunktion ein Signal entsprechend der empfundenen Hörqualität hergestellt ist und dieses Signal zur Überwachung der Hörqualität und zur Umsteuerung zwischen verschiedenen Betriebsmoden des Scanning-Antennen-Diversitysystems verwendet ist.

24. Scanning-Antennen-Diversitysystem nach einem der Ansprüche 1 bis 22
**dadurch gekennzeichnet, dass**
die Logikschaltung (8) derart gestaltet ist, dass bei hinreichender zeitlich gemittelter, mit Hilfe des zweiten Störungsdetektors (7) festgestellter Hörqualität das Diversitysystem im Momentanschaltmodus betrieben ist, wobei dieser aus der Kombination des vom ersten Störungsdetektor (6) gesteuerten Signalselektionsmodus gemäß Anspruch 20 besteht, welcher nach geeignet gewählten Zeitabständen (28) jeweils durch den Aktualisierungszyklus gemäß Anspruch 22 unterbrochen ist und nach dessen Durchlaufen der Signalselektionsmodus jeweils wieder aktiviert ist usw.

25. Scanning-Antennen-Diversitysystem nach Anspruch 23
**dadurch gekennzeichnet, dass**
die Logikschaltung (8) derart gestaltet ist, dass bei Feststellung einer zu geringen zeitlich gemittelten Hörqualität durch den zweiten Störungsdetektor (7) in Verbindung mit zu kleinen Zeitintervallen zwischen den aufeinanderfolgenden Überschreitungen der Frequenzabweichungsschwelle (12) oder/und Amplitudenstörmodulationsschwelle (26) im ersten Störungsdetektor (6) das Diversitysystem im S/N-Modus betrieben ist, bei welchem die Momentanstörungsanzeigen (10) bei der Bildung des logischen Steuersignals (12) unberücksichtigt sind und das logische Steuersignal (12) ausschließlich aus der Störungsanzeige (11) des zweiten Störungsdetektors (7) abgeleitet ist.

26. Scanning-Antennen-Diversitysystem nach Anspruch 25
**dadurch gekennzeichnet, dass**
das System im S/N-Modus gemäß Anspruch 25 betrieben ist und in einem S/N-Signalselektionsmodus arbeitet, in welchem in der logischen Schalteinrichtung (2) adressierbare Schaltzustände (27) vorgesehen sind und für die verschiedenen Schaltzustände (27) das aktuelle Nutz-Störverhältnis S/N der verschiedenen Schaltzustände (27) als Kriterium für die Hörqualität des hochfrequenten Empfangssignals (5) gesondert festgestellt sind und die Logikschaltung (8) als Mikroprozessor (13) mit Speicher- und Sortierfunktion ausgeführt ist, mit dessen Hilfe eine Rangliste der den adressierbaren Schaltzuständen (27) zugeordneten hochfrequenten Empfangssignale (5) im Hinblick auf die Hörqualität dieser Signale gebildet ist und bei Auftreten einer Störungsanzeige (11) mit welcher eine Nutz-Störverhältnis-Schwelle (24) unterschritten ist, über ein entsprechend generiertes Adresssignal ein nächster Schaltzustand (27) entsprechend der nächsten Position in der Rangliste gewählt ist.

27. Scanning-Antennen-Diversitysystem nach Anspruch 26
**dadurch gekennzeichnet, dass**
das System im S/N-Modus gemäß Anspruch 24 und in einem S/N-Aktualisierungszyklus arbeitet, in welchem zur Aktualisierung der Rangliste die adressierbaren Schaltzustände (27) jeweils bei Auftreten einer Störungsanzeige (11) im ersten Störungsdetektor (6) zyklisch auf einen anderen adressierbaren Schaltzustand (27) weitergeschaltet ist, solange, bis alle adressierbaren Schaltzustände (27) angewählt und die aktuellen Nutz-Störverhältnisse S/N mindestens einmal sicher erfasst sind.

28. Scanning-Antennen-Diversitysystem nach Anspruch 26 und 27
**dadurch gekennzeichnet, dass**
das Diversitysystem im S/N-Schaltmodus betrieben ist, wobei dieser aus der Kombination des vom zweiten Störungsdetektor (7) gesteuerten S/N-Signalselektionsmodus gemäß Anspruch 24 besteht, welcher nach geeignet gewählten Zeitabständen (28) jeweils durch den S/N-Aktualisierungszyklus gemäß Anspruch 27 unterbrochen ist und nach dessen Durchlaufen der S/N-Signalselektionsmodus jeweils wieder aktiviert ist usw.

29. Scanning-Antennen-Diversitysystem nach den Ansprüchen 24 und 28
**dadurch gekennzeichnet, dass**
die Zeitabstände (28) an die durch die Fahrgeschwindigkeit gemäß der Rayleigh-Feldverteilung sich ändernde Amplitude des hochfrequenten Empfangssignals (5) angepasst sind und mit wachsender Fahrgeschwindigkeit kürzer gewählt sind.

30. Scanning-Antennen-Diversitysystem nach Anspruch 29
**dadurch gekennzeichnet, dass**
die Zeitabstände (28) aus den ermittelten Zeitintervallen gemäß den Ansprüchen 17, 20 und 22 abgeleitet sind in der Weise, dass bei kürzeren ermittelten Zeitintervallen kleinere Zeitabstände (28) zur häufigeren Aktualisierung der Rangliste der hochfrequenten Empfangssignale (5) eingestellt sind.

31. Scanning-Antennen-Diversitysystem nach Anspruch 24 in Verbindung mit einem der Ansprüche 14 bis 16
**dadurch gekennzeichnet, dass**
im S/N-Modus nach Anspruch 24 das FM-demodulierte ZF-Empfangssignal (9a) bzw. das AM-demodulierte ZF-Empfangssignal (9b) dem ersten Störungsdetektor (6) zur dynamischen Mitführung der Frequenzabweichungsschwelle (18) bzw. der Amplitudenstörmodulationsschwelle (26) zum Zwecke der Bereitstellung aktualisierter Schwellen für den Übergang in den Momentanschaltmodus zugeführt ist.

32. Scanning-Antennen-Diversitysystem nach einem der Ansprüche 1 bis 31
**dadurch gekennzeichnet, dass**
die Logikschaltung (8) derart gestaltet ist, dass zur Verhinderung von unerwünschter zusätzlicher Schaltaktivität nach einer über das logische Steuersignal (12) gegebenen Umschaltanweisung an die logische Schalteinrichtung (2) eine Wartezeit (25) wirksam ist, innerhalb derer keine weitere Umschaltanweisung an die logische Schalteinrichtung (2) weitergegeben wird und welche geringfügig größer ist als die Summe aus der aus der wirksamen Bandbegrenzung infolge der Zwischenfrequenzfilter und aus den weiteren unvermeidbaren Totzeiten der Signalverarbeitungskomponenten bedingten Verzögerungszeit.

33. Scanning-Antennen-Diversitysystem nach einem der Ansprüche 1 bis 32
**dadurch gekennzeichnet, dass**
das ZF-Empfangssignal (9) in einem digital arbeitenden Signalprozessor DSP digitalisiert ist und alle Funktionen der Ansprüche 1 bis 32 durch digitale Signalprozesse realisiert sind.

## Claims

1. Scanning antenna diversity system for FM sound broadcasting for vehicles with an antenna installation (1) with controllable logical switching device (2), in which different switch positions each feed a high-frequency received signal (5) of different diversity to a receiver (3), and an IF received signal (9) derived from this received signal (5) controls a diversity processor (4), which switches the logical switching device (2) on to a different switch position if reception interference is present,
**characterized in that**
in the diversity processor (4)
- a first interference detector (6) is present, whose momentary-interference indication (10) is obtained without delay from the temporal momentary value of the receiver's (3) IF received signal (9) restricted to the IF bandwidth, by detecting interference-caused occurrence of impermissible momentary values of the frequency and amplitude of this signal;
- and a second interference detector (7) is present, whose interference indication (11) is obtained from the same IF received signal (9), but from the time-integrated registering of the interference-signal contents in frequency gaps kept free of the wanted signal in accordance with the signal standardization of the FM multiplex signal of the FM demodulated IF received signal (9a);
- whose two interference indication signals (10, 11) are fed to a logic circuit (8) which is designed in such a way that a logical control signal (12) for controlling the antenna installation (1) with controllable logical switching device is formed in it by evaluation of the interference indication signals (10, 11) of the two interference detectors (6, 7), so that another switch position is selected at the earliest possible time after the occurrence of a received signal (5) which has become unsuitable for reception.

2. Scanning antenna diversity system according to Claim 1
**characterized in that**
the logic circuit (8) is formed by a programmable microprocessor (13), whose sequence program is based on evaluating the interference indication signals (10, 11) according to size and time sequence, taking into account their known differing characteristics with respect to different causes of interference, and performing logic operations on these evaluations in order to form the switch-over commands in the logical control signal (12).

3. Scanning antenna diversity system according to Claim 2
**characterized in that**
both interference detectors (6, 7) are implemented in analog technology, and the momentary-interference indication (10) of the first interference detector (6) obtained from the FM-demodulated IF received signal (9a) and the interference indication (11) of the second interference detector (7) are evaluated, after an analog-digital conversion, in a digital programmable microprocessor (13) according to a suitably designed protocol for structuring the logical control signal (12).

4. Scanning antenna diversity system according to one of Claims 1 to 3
**characterized in that**
in the first interference detector (6), an FM demodulator (17), with a frequency-deviation threshold (18) corresponding to the maximum permissible frequency deviation for an undisturbed high-frequency received signal (5), is present, whose momentary interference indication (10) is formed from the momentary frequency deviation exceeding the frequency-deviation threshold (18), by the occurrence of interference detected in the total signal within an interference detection time t_{S} of at most a few multiples of the reciprocal IF bandwidth, with T_{S} less than 100 microseconds.

5. Scanning antenna diversity system according to one of Claims 1 to 3
**characterized in that**
in the first interference detector (6), an AM rectifier (15) with interference amplitude-modulation indicator (19) is present, whose momentary-interference indication (10) is formed from the occurrence of an amplitude interference modulation in the total signal within an interference detection time t_{S} of at most a few multiples of the reciprocal IF bandwidth, with T_{S} less than 100 microseconds.

6. Scanning antenna diversity system according to Claims 2 and 4
**characterized in that**
in the first interference detector (6), an FM demodulator (17) with frequency-deviation threshold (18) and an AM rectifier (15) with interference amplitude-modulation indicator (19) are present, and the momentary-interference indication (10) is formed from the simultaneous occurrence of the interference-caused frequency deviation and the amplitude interference modulation.

7. Scanning antenna diversity system according to one of Claims 1 to 6
**characterized in that**
in the second interference detector (7), at least one frequency filter (20) is present for decoupling interfering signals in a frequency gap kept free of the wanted signal in accordance with the signal standardization of the FM multiplex signal of the FM-demodulated IF received signal (9a), and the interference energy contained in the interfering signals is evaluated by time integration to form the interference indication signal (11) within a time of t_{q} less than 10 milliseconds.

8. Scanning antenna diversity system according to Claim 7
**characterized in that**
the frequency filter (20) is designed as a high-pass filter (29) for decoupling interfering signals in the frequency range above the highest frequency occurring in the standardized FM multiplex signal, whose lower cut-off frequency is chosen sufficiently low to register all interference, and the edge steepness [*rate of change*] sufficiently high to suppress the wanted-signal content at the output of the filter.

9. Scanning antenna diversity system according to Claim 7
**characterized in that**
the frequency filter (20) is designed as a combined filter, comprising bandpass filters (30) in the pass bands 15 kHz < f 19 kHz and 19 kHz < f < 23 kHz, as well as a high-pass filter with 57kHz<f.

10. Scanning antenna diversity system according to Claim 7
**characterized in that**
the frequency filter (20) for evaluating the interfering signals in the frequency bands 15 kHz < f 19 kHz and 19 kHz < f < 23 kHz is formed by frequency conversion with a carrier wave on the pilot-tone frequency, with a subsequent low-pass filter with a cut-off frequency < 4 kHz.

11. Scanning antenna diversity system according to one of Claims 7 to 10
**characterized in that**
a rectifier circuit (21) with integrating element (22) is used for evaluating the interference energy occurring in the interfering signals.

12. Scanning antenna diversity system according to one of Claims 1 to 3 and 7 to 11
**characterized in that**
a wanted-signal filter (23) for decoupling wanted-signal contents S from the FM-demodulated IF received signal (9a) on frequencies intended for the transmission of wanted signals according to the signal standardization of the FM multiplex signal of the FM-demodulated IF received signal (9a) for time-integrated registering of the wanted-signal energy S is present, and the signal-to-noise ratio S/N is determined in a time t_{q} of less than 10 milliseconds after the interference occurs, and is incorporated into the structuring of the logical control signal (12) in the logic circuit (8).

13. Scanning antenna diversity system according to Claim 12
**characterized in that**
a signal-to-noise ratio threshold (24) is specified, and the logic circuit (8) is designed in such a manner that if it is found the value is below the signal-to-noise ratio, a logical control signal (12) is generated from this threshold at time t₁, which only initiates stepping by the logical switching device (2) if the first interference detector (6) has not indicated any interference during the period t₁ - delta t < t < t₁, with delta t being determined by the detection time of the second interference detector (7) (interference indication mode).

14. Scanning antenna diversity system according to Claim 1
**characterized in that**
in the first interference detector (6), the momentary-interference indication (10) exists as a binary signal (14), and the frequency-deviation threshold (18) is designed to be variable in such a manner that it is set depending on the current modulation swing, time averaged via an integration time set appropriately, and is raised according to a specified function as the modulation swing increases.

15. Scanning antenna diversity system according to Claim 14 in combination with one of the claims 5 to 6
**characterized in that**
an amplitude interference modulation threshold (26) and the interference indication (11), as a binary signal (14) if this threshold is exceeded, exist and the momentary-interference indication (10) is given by the simultaneous exceeding of the frequency-deviation threshold (18) and the amplitude interference modulation threshold (26) as a binary signal (14).

16. Scanning antenna diversity system according to Claim 15
**characterized in that**
the amplitude interference modulation threshold (26) is designed to be variable in such a manner that it is set depending on the current AM-demodulated IF received signal (9b) of the IF received signal (9), averaged via an integration time set appropriately, and as this signal increases in magnitude, the amplitude interference modulation threshold (26) is raised according to a specified function.

17. Scanning antenna diversity system according to Claim 14 and 15
**characterized in that**
the time intervals between successive instances of exceeding the frequency-deviation threshold (12) and/or the amplitude interference modulation threshold (26) are registered in the first interference detector (6) in the logic circuit (8), and are used as a criterion for the quality of the high-frequency received signal (5), and the frequency-deviation threshold (12) and/or the amplitude interference modulation threshold (26) is/are raised as the time intervals become shorter, in order to reduce the amount of switching to and fro.

18. Scanning antenna diversity system according to Claim 1 and 2
**characterized in that**
the first interference detector (6) is represented by a Philips model TEA 6101 processor or a processor designed according to a similar principle.

19. Scanning antenna diversity system according to Claim 14 and 15
**characterized in that**
the current time averages of the FM-demodulated IF received signal (9a) and the AM-demodulated IF received signal (9b) are fed into the microprocessor (13), converted from analog to digital there, and by means of a computer program and subsequent digital-to-analog conversion, signals are generated which are fed into the first interference detector (6) for controlling the frequency-deviation threshold (12) and the amplitude interference modulation threshold (26).

20. Scanning antenna diversity system according to one of Claims 1 to 19
**characterized in that**
the system operates in a signal selection mode in which addressable switching states (27) are provided in the logical switching device (2), and when the system is operated according to Claim 13 for the various switching states (27) the current time intervals between the consecutive switch-overs of the logical switching device (2) for the different switching states (27) are registered separately as a criterion for the quality of the high-frequency received signal (5), and the logic circuit (8) is implemented as a microprocessor with storage and sorting functions, by means of which a ranking list of the high-frequency received signals (5) assigned to the addressable switching states (27) is formed with respect to the quality of these signals, and a next switching state (27) corresponding to the next position on the ranking list is selected via an address signal generated correspondingly, if a momentary-interference indication (10) or an interference indication (11) occurs (selection mode).

21. Scanning antenna diversity system according to Claim 20
**characterized in that**
for the various switching states (27) as a criterion for the quality of the high-frequency received signal (5), however, the audio quality is determined separately, however, with the help of the second interference detector (7), in accordance with Claim 23, and the ranking list of the high-frequency received signals (5) assigned to the addressable switching states (27) is formed with respect to the quality of these signals.

22. Scanning antenna diversity system according to Claim 20
**characterized in that**
the system operates in an updating cycle, in which, in order to update the ranking list, the addressable switching states (27) is ["*are*" *?*] switched on to another addressable switching state (27) cyclically whenever a momentary interference indication (10) occurs in the first interference detector (6), or an interference indication (11) in the second interference detector (7), until all addressable switching states (27) have been selected, and the current time interval registered at least once reliably (updating mode).

23. Scanning antenna diversity system according to one of Claims 1 to 22
**characterized in that**
a signal corresponding to the perceived audio quality is generated via an evaluation function from the signal-to-noise ratio S/N determined in the second interference detector, and this signal is used to monitor the audio quality and to switch between various operating modes of the scanning antenna diversity system.

24. Scanning antenna diversity system according to one of Claims 1 to 22
**characterized in that**
the logic circuit (8) is designed so that, if the time-averaged audio quality determined with the help of the second interference detector (7) is sufficient, the diversity system is operated in the momentary switching mode, this consisting of the combination of the signal selection mode controlled by the first interference detector (6) in accordance with Claim 20 with the updating cycle in accordance with Claim 22, in such a fashion that the signal selection mode is interrupted at appropriately selected intervals (28) by the updating mode in accordance with Claim 22, and after this has been executed, the signal selection mode is re-activated, etc.

25. Scanning antenna diversity system according to Claim 23
**characterized in that**
the logic circuit (8) is designed so that if a too low time-average audio quality is determined by the second interference detector (7), together with too small time intervals between consecutive instances of exceeding the frequency-deviation threshold (12) and/or amplitude interference modulation threshold (26) in the first interference detector (6), the diversity system is operated in the S/N mode, in which the momentary interference indications (10) are ignored in forming the logical control signal (12), and the logical control signal (12) is derived exclusively from the interference indication (11) of the second interference detector (7).

26. Scanning antenna diversity system according to Claim 25
**characterized in that**
the system is operated in S/N mode according to Claim 25, and functions in an S/N signal selection mode, in which addressable switching states (27) are provided in the logical switching device (2), and for the various switching states (27), the current signal-to-noise ratios S/N of the various switching states (27) are determined separately as a criterion for the audio quality of the high-frequency received signal (5), and the logic circuit (8) is implemented as a microprocessor (13) with storage and sorting functions, by means of which a ranking list of the high-frequency received signals (5) assigned to the addressable switching states (27) is formed with respect to the quality of these signals, and a next switching state (27) corresponding to the next position on the ranking list is selected via an address signal generated correspondingly, if an interference indication (11) dropping below a signal-to-noise ratio threshold occurs.

27. Scanning antenna diversity system according to Claim 26
**characterized in that**
the system operates in the signal-to-noise ratio mode according to Claim 24 and in an S/N updating cycle, in which, in order to update the ranking list, the addressable switching states (27) is [*"are" ?*] switched on to another addressable switching state (27) cyclically whenever an interference indication (11) occurs in the first interference detector (6), until all addressable switching states (27) have been selected, and the current signal-to-noise ratios S/N registered at least once reliably.

28. Scanning antenna diversity system according to Claim 26 and 27
**characterized in that**
the diversity system is operated in the S/N switching mode, this consisting of the combination of the S/N signal selection mode controlled by the second interference detector (7) in accordance with Claim 24 #with the S/N updating cycle in accordance with Claim 27, in such a fashion that the S/N signal selection mode is# interrupted at appropriately selected intervals (28) by the S/N updating mode in accordance with Claim 27, and after this has been executed, the S/N signal selection mode is re-activated, etc.

29. Scanning antenna diversity system according to Claims 24 and 28
**characterized in that**
the time intervals (28) are adapted to the changing amplitude of the high-frequency received signal (5) due to the driving speed, in accordance with the Rayleigh field distribution, shorter ones being selected as the driving speed increases.

30. Scanning antenna diversity system according to Claim 29
**characterized in that**
the time intervals (28) are derived from the time intervals determined according to Claims 17, 20, and 22 in such a fashion that when shorter time intervals are determined, smaller time intervals (28) are set for more frequent updating of the ranking list of high-frequency received signals (5).

31. Scanning antenna diversity system according to Claim 24, in connection with one of Claims 14 to 16,
**characterized in that**
in the S/N mode according to Claim 24, the FM-demodulated IF received signal (9a) or the AM-demodulated IF received signal (9b) is fed into the first interference detector (6) for dynamic tracking by the frequency-deviation threshold (18) or the amplitude interference modulation threshold (26), for the purpose of providing updated thresholds for the transition to the momentary switching mode.

32. Scanning antenna diversity system according to one of Claims 1 to 31
**characterized in that**
the logic circuit (8) is designed so that, in order to prevent unwanted additional switching activity after a switch-over instruction given to the logical switching device (2) via the logical control signal (12), a waiting period (25) is in effect, during which no further switch-over instruction is passed on to the logical switching device (2), and which is slightly longer than the sum of the delays caused by the effective band limitation due to the intermediate-frequency filter and by the other unavoidable dead times of the signal-processing components.

33. Scanning antenna diversity system according to one of Claims 1 to 32
**characterized in that**
the IF received signal (9) is digitalized in a digital signal processor DSP, and all functions of Claims 1 to 32 are implemented by digital signal processes.

## Revendications

1. Système d'antennes à diversité de balayage pour la radio FM pour des véhicules, avec une installation d'antennes (1) à dispositif de commutation logique contrôlable (2), dans laquelle un signal de réception (5) à haute fréquence différent dans le sens d'une diversité dans chacune des différentes positions de commutation est amené à un récepteur (3) et un signal de réception en fréquence intermédiaire (9) dérivé du signal de réception (5) active un processeur de diversité (4) qui commute le dispositif de commutation logique contrôlable (2) vers une autre position de commutation en cas de perturbation de la réception, **caractérisé en ce qu'**il est prévu dans le processeur de diversité (4) :
- un premier détecteur de perturbations (6) dont l'indication de perturbation momentanée (10) est obtenue sans retard à partir de la valeur momentanée dans le temps du signal de réception en fréquence intermédiaire (9) du récepteur (3) limité à la bande des fréquences intermédiaires par constatation de l'apparition liée aux perturbations de valeurs momentanées inacceptables de fréquence et d'amplitude de ce signal,
- et un second détecteur de perturbations (7) dont l'indication de perturbation (11) provient du même signal de réception en fréquence intermédiaire (9), mais est tirée de la détection intégrale dans le temps des contenus des signaux de perturbation dans des lacunes de fréquence laissées libres par le signal utile selon la normalisation du signal de multiplexage FM du signal de réception en fréquence intermédiaire démodulé en fréquence (9a),
- dont les deux signaux d'indication de perturbation (10, 11) sont transmis à un circuit logique (8) conçu de telle manière que par l'interprétation des signaux d'indication de perturbations (10, 11) des deux détecteurs de perturbations (6, 7), il constitue un signal de commande logique (12) pour commander l'installation d'antenne (1) à dispositif de commutation logique contrôlable (2), de telle sorte qu'une autre position de commutation soit choisie le plus rapidement possible après l'apparition d'un signal de réception (5) qui n'est plus suffisamment bon pour être reçu.

2. Système d'antennes à diversité de balayage selon la revendication 1, **caractérisé en ce que** le circuit logique (8) est formé par un microprocesseur programmable (13) dont le programme d'exécution est construit en vue de l'évaluation des signaux d'indication de perturbations (10, 11) selon leur grandeur et leur évolution dans le temps, compte tenu de leurs caractéristiques différentes connues concernant les différentes causes de perturbations et avec une liaison logique de ces interprétations en vue de former les ordres de commutation dans le signal de commande logique (12).

3. Système d'antennes à diversité de balayage selon la revendication 2, **caractérisé en ce que** les deux détecteurs de perturbations (6, 7) sont analogiques et l'indication de perturbation momentanée (10) issue du signal de réception en fréquence intermédiaire démodulé en fréquence (9a) d'un détecteur de perturbations (6) et l'indication de perturbation (11) du deuxième détecteur de perturbations (7) sont interprétées après une conversion analogique-numérique dans un microprocesseur programmable à fonctionnement numérique selon un protocole adéquat afin de constituer le signal de commande logique (12).

4. Système d'antennes à diversité de balayage selon l'une des revendications 1 à 3, **caractérisé en ce qu'**il est prévu dans le premier détecteur de perturbations (6) un démodulateur FM (17) avec un seuil d'écart de fréquence (18) correspondant à l'écart de fréquence maximal autorisé pour un signal de réception (5) à haute fréquence non perturbé, dont l'indication de perturbation momentanée (10) est constituée à partir de l'écart de fréquence momentané dépassant le seuil d'écart de fréquence (18) par l'apparition d'une modulation d'amplitude de perturbation dans le signal total à l'intérieur d'un temps de détection des perturbations tₛ de quelques multiples de la bande de fréquence intermédiaire réciproque au maximum avec tₛ < 100 µsec.

5. Système d'antennes à diversité de balayage selon l'une des revendications 1 à 3, **caractérisé en ce qu'**il est prévu dans le premier détecteur de perturbations (6) un redresseur AM (15) avec un indicateur de modulation d'amplitude de perturbation (19), dont l'indication de perturbation momentanée (10) est constituée à partir de l'apparition d'une modulation d'amplitude de perturbation dans le signal total dans un délai de reconnaissance des perturbations tₛ de quelques multiples de la bande passante FI réciproque au maximum, avec tₛ < 100 µsec.

6. Système d'antennes à diversité de balayage selon les revendications 2 et 4, **caractérisé en ce qu'**il est prévu dans le premier détecteur de perturbations (6) un démodulateur FM (17) avec un seuil d'écart de fréquence (18) et un redresseur AM (15) avec un indicateur de modulation d'amplitude de perturbation (19) et l'indication de perturbation momentanée (10) est formée à partir de l'apparition simultanée de l'écart de fréquence lié à une perturbation et de la modulation d'amplitude de perturbation.

7. Système d'antennes à diversité de balayage selon l'une des revendications 1 à 6, **caractérisé en ce qu'**il est prévu dans le second détecteur de perturbations (7) au moins un filtre de fréquence (20) pour le découplage des signaux de perturbation dans une lacune de fréquences laissée libre par le signal utilisé selon la normalisation du signal du multiplexage FM du signal de réception en fréquence intermédiaire démodulé en fréquence (9a) et l'énergie de perturbation contenue dans les signaux de perturbation est interprétée par intégration temporelle pour former le signal d'indication de perturbation (11) dans un intervalle de temps t_{q} < 10 ms.

8. Système d'antennes à diversité de balayage selon la revendication 7, **caractérisé en ce que** le filtre de fréquence (20) est conçu comme un passe-haut (29) pour découpler les signaux parasités dans la plage de fréquences située au-dessus de la fréquence la plus haute survenant dans le signal de multiplexage FM standardisé, dont la fréquence limite inférieure est suffisamment basse pour capter toutes les perturbations et l'inclinaison des versants est suffisamment grande pour inhiber le contenu du signal utile à la sortie du filtre.

9. Système d'antennes à diversité de balayage selon la revendication 7, **caractérisé en ce que** le filtre de fréquence (20) est conçu comme un filtre combiné composé de passe-bande (30) dans les plages de fréquence de passage de 15 kHz < f < 19 kHz et 19 kHz < f < 23 kHz et d'un passe-haut à 57 kHz < f.

10. Système d'antennes à diversité de balayage selon la revendication 7, **caractérisé en ce que** le filtre de fréquence (20) est conformé pour interpréter les signaux de perturbation dans les plages de fréquence de 15 kHz < f < 19 kHz et 19 kHz < f < 23 kHz par conversion de la fréquence avec une oscillation de fréquence de porteuse provenant de la fréquence de signal pilote avec un passe-bas d'aval ayant une fréquence limite inférieure à 4 kHz.

11. Système d'antennes à diversité de balayage selon l'une des revendications 7 à 10, **caractérisé en ce qu'**il est prévu pour interpréter l'énergie de perturbation N se produisant dans les signaux de perturbation un circuit de redresseur (21) avec un élément intégrateur (22).

12. Système d'antennes à diversité de balayage selon l'une des revendications 1 à 3 et 7 à 11, **caractérisé en ce qu'**un filtre de signal utile (23) est prévu pour découpler les contenus de signal utile S du signal de réception en fréquence intermédiaire démodulé en fréquence (9a) à des fréquences prévues pour la transmission des signaux utiles selon la normalisation du signal de multiplexage FM du signal de réception en fréquence intermédiaire démodulé en fréquence (9a) en vue de la détection intégrée par le temps de l'énergie du signal utile S et le rapport utile/parasite S/N est déterminé dans un délai t_{q} < 10 ms après l'apparition de la perturbation et pris en compte dans le circuit logique (8) pour la formation du signal de commande logique (12).

13. Système d'antennes à diversité de balayage selon la revendication 12, **caractérisé en ce qu'**il est prévu un seuil prédéterminé de rapport utile/parasite (24) et le circuit logique (8) est conformé de telle manière que si une insuffisance du rapport utile/parasite S/N par rapport à ce seuil est constatée à l'instant t₁, un signal logique de commande (12) est généré, qui ne commande la commutation du dispositif de commutation logique (2) que si le premier détecteur de perturbations (6) n'a pas indiqué de perturbations pendant un intervalle de temps t₁-Δt < t < t₁, Δt étant donné par le temps de détection du second détecteur de perturbations (7) (mode d'indication des perturbations).

14. Système d'antennes à diversité de balayage selon la revendication 1, **caractérisé en ce que** l'indication de perturbation momentanée (10) se présente dans le premier détecteur de perturbations (6) comme un signal binaire (14) et le seuil d'écart de fréquence (18) est variable de manière à être ajusté en fonction du glissement de modulation actuel en moyenne dans le temps sur une période d'intégration appropriée et relevé avec l'augmentation du glissement de modulation selon une fonction prédéterminée.

15. Système d'antennes à diversité de balayage selon la revendication 1, **caractérisé en ce qu'**il est prévu un seuil de modulation d'amplitude de perturbation (26) et l'indication de perturbation (11) se produit sous la forme d'un signal binaire (14) en cas de dépassement de ce seuil et l'indication de perturbation momentanée (10) est donnée par l'apparition simultanée du dépassement du seuil d'écart de fréquence (18) et du seuil de modulation d'amplitude de perturbation (26) sous la forme d'un signal binaire (14).

16. Système d'antennes à diversité de balayage selon la revendication 15, **caractérisé en ce que** le seuil de modulation d'amplitude de perturbation (26) est variable de manière à être ajusté en fonction du signal de réception en fréquence intermédiaire démodulé en amplitude (9b) en moyenne sur une période d'intégration adéquate et le seuil de modulation d'amplitude de perturbation (26) est relevé avec l'augmentation de ce signal selon une fonction prédéterminée.

17. Système d'antennes à diversité de balayage selon les revendications 14 et 15, **caractérisé en ce que** les intervalles de temps entre les dépassements successifs du seuil d'écart de fréquence (18) et/ou du seuil de modulation d'amplitude de perturbation (26) sont captés dans un détecteur de perturbations (6) du circuit logique (8) et utilisés comme critère de qualité du signal de réception à haute fréquence (5) et, en vue de réduire les instabilités de commutation, le seuil d'écart de fréquence (18) et/ou le seuil de modulation d'amplitude de perturbation (26) sont relevés lorsque les intervalles de temps raccourcissent.

18. Système d'antennes à diversité de balayage selon la revendication 1 ou 2, **caractérisé en ce que** le premier détecteur de perturbations (6) est formé par le processeur de type TEA 6101 de la société Philips ou par processeur conçu selon un principe similaire.

19. Système d'antennes à diversité de balayage selon les revendications 14 et 15, **caractérisé en ce que** les moyennes dans le temps actuelles du signal de réception en fréquence intermédiaire démodulé en fréquence (9a) et du signal de réception en fréquence intermédiaire démodulé en amplitude (9b) sont amenées au microprocesseur (13), y subissent une conversion analogique-numérique, et des signaux sont générés à l'aide d'un programme de calcul et d'une conversion analogique-numérique puis amenés au premier détecteur de perturbations (6) pour contrôler le seuil d'écart de fréquence (18) et le seuil de modulation d'amplitude de perturbation (26).

20. Système d'antennes à diversité de balayage selon l'une ou l'ensemble des revendications 1 à 19, **caractérisé en ce que** le système fonctionne dans un mode de sélection de signaux dans lequel des états de commutation (27) adressables sont prévus dans le dispositif de commutation logique (2) et, lors du fonctionnement du système selon la revendication 13, l'intervalle de temps entre les commutations successives du dispositif de commutation logique (2) pour les différents états de commutation (27) est déterminé séparément comme critère de qualité du signal de réception à haute fréquence (5) pour les différents états de commutation (27) et le circuit logique (8) est conçu comme un microprocesseur (13) avec une fonction de mémorisation et de tri, à l'aide duquel une liste de classement des signaux de réception à haute fréquence (5) associés aux états de commutation (27) est formée par rapport à la qualité de ces signaux et, en cas d'apparition d'une indication de perturbation momentanée (10) ou d'une indication de perturbation (11), un état de commutation (27) suivant correspondant à la position suivante dans la liste de classement est sélectionné par un signal d'adresse généré de manière appropriée.

21. Système d'antennes à diversité de balayage selon la revendication 20, **caractérisé en ce que** la qualité d'audition selon la revendication 23 est toutefois constatée séparément à l'aide du second détecteur de perturbations (7) comme critère de qualité du signal de réception à haute fréquence (5) pour les différents états de commutation (27) et la liste de classement des signaux de réception à haute fréquence (5) associés aux états de commutation (27) adressables est formée par rapport à la qualité de ces signaux.

22. Système d'antennes à diversité de balayage selon la revendication 20, **caractérisé en ce que** le système fonctionne selon un cycle d'actualisation dans lequel, pour actualiser la liste de classement, les états de commutation (27) adressables sont commutés de manière cyclique, lorsqu'une indication de perturbation momentanée (10) se produit dans le premier détecteur de perturbations (6) ou une indication de perturbation (11) dans le second indicateur de perturbations (7), vers un autre état de commutation (27) adressable, jusqu'à ce que tous les états de commutation (27) adressables aient été sélectionnés et que les intervalles de temps actuels aient été détectés de façon sûre au moins une fois (mode d'actualisation).

23. Système d'antennes à diversité de balayage selon l'une ou l'ensemble des revendications 1 à 22, **caractérisé en ce qu'**un signal correspondant à la qualité d'audition perçue est constitué à partir du rapport utile/parasite S/N déterminé dans le second détecteur de perturbations (7) à l'aide d'une fonction d'évaluation, et ce signal est utilisé pour surveiller la qualité d'audition et commuter entre différents modes de fonctionnement du système d'antennes à diversité de balayage.

24. Système d'antennes à diversité de balayage selon l'une des revendications 1 à 22, **caractérisé en ce que** le circuit logique (8) est conçu de telle sorte que lorsque la qualité d'audition moyenne dans le temps constatée à l'aide du second détecteur de perturbations (7) est suffisante, le système de diversité fonctionne en mode de commutation momentanée, celle-ci se composant de la combinaison du mode de sélection de signal commandé par le premier détecteur de perturbations (6) selon la revendication 20, qui est interrompu après des intervalles de temps (28) choisis de manière appropriée par le cycle d'actualisation selon la revendication 22 et le mode de sélection de signal est réactivé après le passage de celui-ci, et ainsi de suite.

25. Système d'antennes à diversité de balayage selon la revendication 23, **caractérisé en ce que** le circuit logique (8) est conçu de telle sorte qu'en cas de constatation d'une qualité d'audition moyenne dans le temps trop faible par le second détecteur de perturbations (7) en relation avec des intervalles de temps trop réduits entre les dépassements successifs du seuil d'écart de fréquence (12) et/ou du seuil de modulation d'amplitude de perturbation (26) dans un détecteur de perturbations (6), le système de diversité fonctionne en mode S/N, dans lequel les indications de perturbation momentanée (10) ne sont pas prises en compte pour former le signal de commande logique (12) et le signal de commande logique (12) est exclusivement dérivé de l'indication de perturbation (11) du second détecteur de perturbations (7).

26. Système d'antennes à diversité de balayage selon la revendication 25, **caractérisé en ce que** le système fonctionne en mode S/N selon la revendication 25 et dans un mode de sélection de signal S/N, dans lequel il est prévu des états de commutation (27) adressables dans le dispositif de commutation logique (2) et le rapport utile/parasite S/N des différents états de commutation (27) est déterminé séparément comme critère de qualité d'audition du signal de réception à haute fréquence (5) pour les différents états de commutation (27) et le circuit logique (8) est conçu comme un microprocesseur (13) avec une fonction de mémoire et de tri, à l'aide de laquelle une liste de classement des signaux de réception à haute fréquence (5) associés aux états de commutation (27) est formée par rapport à la qualité d'audition de ces signaux et, en cas d'apparition d'une indication de perturbation (11) avec laquelle un seuil de rapport utile/parasite (24) n'est pas atteint, un état de commutation (27) suivant correspondant à la position suivante dans la liste de classement est sélectionné par un signal d'adresse généré de manière appropriée.

27. Système d'antennes à diversité de balayage selon la revendication 26, **caractérisé en ce que** le système fonctionne en mode S/N selon la revendication 24 et dans un cycle d'actualisation S/N dans lequel, pour actualiser la liste de classement, les états de commutation (27) adressables sont commutés de manière cyclique, lorsqu'une indication de perturbation (11) se produit dans le premier indicateur de perturbations (6), vers un autre état de commutation (27) adressable, jusqu'à ce que tous les états de commutation (27) adressables aient été sélectionnés et que les rapports utile/parasite actuels aient été détectés de façon sûre au moins une fois.

28. Système d'antennes à diversité de balayage selon les revendications 26 et 27, **caractérisé en ce que** le système de diversité fonctionne en mode de commutation S/N, celui-ci se composant de la combinaison du mode de sélection de signal S/N commandé par le second détecteur de perturbations (7) selon la revendication 24, qui est interrompu après des intervalles de temps (28) choisis de manière appropriée par le cycle d'actualisation S/N selon la revendication 27 et le mode de sélection de signal S/N est réactivé après le passage de celui-ci.

29. Système d'antennes à diversité de balayage selon les revendications 24 et 28, **caractérisé en ce que** les intervalles de temps (28) sont adaptés à l'amplitude du signal de réception (5) à haute fréquence, qui change en fonction de la vitesse de circulation selon la distribution de champ de Rayleigh et est d'autant plus courte que la vitesse de circulation est élevée.

30. Système d'antennes à diversité de balayage selon la revendication 29, **caractérisé en ce que** les intervalles de temps (28) sont dérivés des intervalles de temps déterminés selon les revendications 17, 20 et 22 de telle manière que lorsque les intervalles de temps déterminés sont courts, des intervalles de temps (28) plus courts sont réglés pour une actualisation plus fréquente de la liste de classement des signaux de réception (5) à haute fréquence.

31. Système d'antennes à diversité de balayage selon la revendication 24 en relation avec l'une des relations 14 à 16, **caractérisé en ce que** dans le mode S/N selon la revendication 24, le signal de réception en fréquence intermédiaire démodulé en fréquence (9a) ou le signal de réception en fréquence intermédiaire démodulé en amplitude (9b) est transmis au premier détecteur de perturbations (6) pour l'entraînement dynamique du seuil d'écart de fréquence (18) ou du seuil de modulation d'amplitude (26) afin de donner des seuils actualisés pour le passage en mode de commutation momentanée.

32. Système d'antennes à diversité de balayage selon l'une des revendications 1 à 31, **caractérisé en ce que** le circuit logique (8) est conçu de telle sorte que pour empêcher les activités de commutation supplémentaires intempestives après une instruction de commutation donnée par le signal de commande logique (12) au dispositif logique de commutation (2), un temps d'attente (25) est ménagé, pendant lequel aucune autre instruction de commutation n'est transmise au dispositif de commutation logique (2) et qui est légèrement plus grand que la somme du temps de latence résultant des inévitables temps morts des composantes de traitement du signal liés à la limitation efficace de la bande par le filtre de fréquences intermédiaires.

33. Système d'antennes à diversité de balayage selon l'une ou l'ensemble des revendications 1 à 32, **caractérisé en ce que** le signal de réception en fréquence intermédiaire (9) est numérisé dans un processeur de signaux numérique DSP et toutes les fonctions selon les revendications 1 à 32 sont réalisées à l'aide de processus de signaux numériques.
